(19) Europäisches Patentamt / European Patent Office / Office européen des brevets

(11) **EP 4 644 120 A1**

(12) **EUROPEAN PATENT APPLICATION**

(43) Date of publication:
05.11.2025 Bulletin 2025/45

(21) Application number: 24173553.9

(22) Date of filing: 30.04.2024

(51) International Patent Classification (IPC):
*B32B 27/08* (2006.01)    *B32B 27/18* (2006.01)
*B32B 27/20* (2006.01)    *B32B 27/30* (2006.01)
*B32B 27/32* (2006.01)    *C08J 5/18* (2006.01)
*C08L 23/04* (2006.01)

(52) Cooperative Patent Classification (CPC):
**C08L 23/04; B32B 27/08; B32B 27/18;**
**B32B 27/20; B32B 27/30; B32B 27/32; C08J 5/18;**
B32B 2250/03; B32B 2250/24; B32B 2250/242;
B32B 2264/00; B32B 2264/10; B32B 2264/102;
B32B 2264/104; B32B 2272/00;          (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• YALALOV, Denis
  444 86 Stenungsund (SE)
• BROEDERS, Bert
  3583 Beringen (BE)
• SCHÜTZ, Florian
  1020 Vienna (AT)

(74) Representative: **Maiwald GmbH**
**Elisenhof**
**Elisenstraße 3**
**80335 München (DE)**

(54) **MULTILAYER INSULATING FILMS FOR ELECTRICAL DEVICES**

(57)    A film that comprises:
a) a first layer (A) comprising a polypropylene composition (PC1),
b) a second layer (B) comprising a polyolefin composition (PC2) comprising:
i) a propylene-ethylene copolymer (PP2) having a $T_m$ of 130 to 150 °C; and
ii) a first ethylene/$C_4$-$C_{10}$ alpha olefin copolymer (PE1) having a $T_m$ of 30 to 60 °C, and

c) a third layer (C) comprising a polyethylene composition (PC3),

wherein layer (B) has a first surface and a second surface located opposite the first surface,
a surface of layer (B) is in adherent contact with layer (A) and the opposite surface of layer (B) is in adherent contact with layer (C), resulting in a layer structure A-B-C having layer (B) disposed between layer (A) and layer (C).

EP 4 644 120 A1

**EP 4 644 120 A1**

(52) Cooperative Patent Classification (CPC): (Cont.)
B32B 2307/30; B32B 2307/306; B32B 2307/3065;
B32B 2307/308; B32B 2307/7376; B32B 2307/748;
B32B 2457/00; B32B 2457/04; B32B 2553/00

**Description**

**Field of the Invention**

The present invention is directed to a film comprising at least three layers, wherein a first layer comprises a polypropylene composition, a second layer, in adherent contact with the first layer, comprises a polyolefin composition comprising a propylene-ethylene copolymer and an ethylene/$C_4$-$C_{10}$ alpha olefin copolymer, and a third layer, in adherent contact with the second layer, comprises a polyethylene composition, an article comprising an electrical device and one or more of said films, and a use of the film as an insulating film for an electrical device.

**Background to the Invention**

The performance of electrical devices is often limited by the properties of the materials used as insulators. Insulators must function in extreme conditions, including high temperatures and strong electric fields. As such, excellent electrical, thermal and mechanical properties are required, as well as a good resistance to environmental stress. Furthermore, the ability to protect the electrical device from moisture is also critical.

Polypropylene is known to have excellent mechanical and electrical properties, as well as being water resistant and has excellent resistance to environmental stress; however, the application of polypropylene in insulating films for electrical devices is limited by a number of factors. Since it is generally not possible to achieve the beneficial mechanical properties whilst also providing a soft composition that prevents damage to the electrical device (either whilst applying the film or during operation of the device), multilayer films are often employed, having a polypropylene outer layer and a softer inner layer (such as a polar ethylene copolymer layer).

Whilst such films offer excellent insulation properties, it remains a challenge to ensure that the multilayer film has good adhesion to the electrical devices, as well as between the individual layers of the multilayer film. It is especially critical to achieve improved adhesion between the individual layers of the multilayer film without sacrificing other properties of the multilayer film, such as thermal properties and flame retardance.

**Summary of the Invention**

The present invention is based on the finding that a tie layer comprising a high melting point propylene-ethylene copolymer and a low melting point ethylene/$C_4$-$C_{10}$ alpha olefin copolymer can improve the internal adhesion of multilayer films for insulating electrical devices.

In a first aspect, the present invention is directed to a film that comprises, in the given order, the following layers:

a) a first layer (A) comprising a polypropylene composition (PC1),
b) a second layer (B) comprising a polyolefin composition (PC2) comprising:

i) a propylene-ethylene copolymer (PP2) having a melting temperature ($T_m$), determined according to ISO 11357/part3/method C2, in the range from 130 to 150 °C; and
ii) a first ethylene/$C_4$-$C_{10}$ alpha olefin copolymer (PE1) having a melting temperature ($T_m$), determined according to ISO 11357/part3/method C2, in the range from 30 to 60 °C, and

c) a third layer (C) comprising a polyethylene composition (PC3),

wherein the second layer (B) has a first surface and a second surface located opposite the first surface, the first surface of the second layer (B) is in adherent contact with a surface of the first layer (A) and the second surface of the second layer (B) is in adherent contact with a surface of the third layer (C), resulting in a layer structure A-B-C having the second layer (B) disposed between the first layer (A) and the third layer (C).

In a second aspect, the present invention is directed to a process for producing the film of the first aspect, comprising the following steps:

a) providing the polypropylene composition (PC1), the polyolefin composition (PC2), and the polyethylene composition (PC3);
b) co-extruding at least one layer comprising the polypropylene composition (PC 1), one layer comprising the polyolefin composition (PC2), and at least one layer comprising the polyethylene composition (PC3), thereby obtaining the film according to the first aspect.

In a third aspect, the present invention is directed to an article comprising the given layers in the following order:

a) a first insulating film (F1);
b) an electrical device (D); and
c) a second insulating film (F2),

wherein the electrical device (D) has a first surface and a second surface located opposite the first surface, wherein the first surface of the electrical device (D) is in adherent contact with a surface of the first insulating film (F 1) and the second surface of the electrical device (D) is in adherent contact with a surface of the second insulating film (F2), resulting in a layer structure F1-D-F2 having the electrical device (D) disposed between the first insulating film (F1) and the second insulating film (F2);

wherein at least one of the first insulating film (F1) and the second insulating film (F2), preferably both the first insulating film (F1) and the second insulating film (F2), is/are films according to the first aspect, wherein, if the first insulating film (F1) is a film according to the first aspect, the electrical device is in adherent contact with the third layer (C) of the first insulating film (F1), and wherein, if the second insulating film (F2) is a film according to the first aspect, the electrical device is in adherent contact with the third layer (C) of the second insulating film (F2).

In a final aspect, the present invention is directed to a use of the film of the first aspect as an insulating film for an electrical device.

## Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a", "an", and the like refers to one or more.

In the following amounts are given in % by weight (wt.-%) unless it is stated otherwise.

A propylene homopolymer is a polymer that essentially consists of propylene monomer units. Due to impurities especially during commercial polymerization processes, a propylene homopolymer can comprise up to 0.1 mol-% comonomer units, preferably up to 0.05 mol-% comonomer units and most preferably up to 0.01 mol-% comonomer units.

A propylene random copolymer is a copolymer of propylene monomer units and comonomer units, preferably selected from ethylene and $C_4$-$C_8$ alpha-olefins, in which the comonomer units are distributed randomly over the polymeric chain. The propylene random copolymer can comprise comonomer units from one or more comonomers different in their amounts of carbon atoms.

Heterophasic propylene copolymers typically comprise:

a) a crystalline propylene homopolymer or copolymer matrix (M); and
b) an elastomeric rubber, preferably a propylene-ethylene copolymer (E).

In case of a random heterophasic propylene copolymer, said crystalline matrix phase is a random copolymer of propylene and at least one alpha-olefin comonomer.

The elastomeric phase can be a propylene copolymer with a high amount of comonomer that is not randomly distributed in the polymer chain but is distributed in a comonomer-rich block structure and a propylene-rich block structure. A heterophasic polypropylene usually differentiates from a monophasic propylene copolymer in that it shows two distinct glass transition temperatures Tg which are attributed to the matrix phase and the elastomeric phase.

In the following, the term "polypropylene" means any polymer that is propylene-based (i.e. at least 50 mol-% of propylene monomers). The term "polyethylene means any polymer that is ethylene-based (i.e. at least 50 mol-% of ethylene monomers. The term "polypropylene composition" refers to a composition that predominantly contains (i.e. at least 50 wt.-%) polypropylene. The term "polyethylene composition" refers to a composition that predominantly contains (i.e. at least 50 wt.-%) polyethylene.

The present invention will now be described in more detail.

## Detailed Description

### Film

The film of the first aspect comprises, in the given order, the following layers:

a) a first layer (A) comprising a polypropylene composition (PC1);
b) a second layer (B) comprising a polyolefin composition (PC2);
c) a third layer (C) comprising a polyethylene composition (PC3).

It is preferred that the peel force between the polyolefin composition (PC2) and the polyethylene composition (PC3), determined according to method b) given in the determination methods, is in the range from 15 to 50 N/cm, more preferably in the range from 20 to 45 N/cm, most preferably in the range from 25 to 40 N/cm.

The second layer (B) has a first surface and a second surface located opposite the first surface, the first surface of the second layer (B) is in adherent contact with a surface of the first layer (A) and the second surface of the second layer (B) is in adherent contact with a surface of the third layer (C), resulting in a layer structure A-B-C having the second layer (B) disposed between the first layer (A) and the third layer (C).

It is preferred that the first layer (A), the second layer (B), and the third layer (C) are co-extruded layers, in other words they have been formed in a co-extrusion process. The co-extrusion process differs from a lamination process, in which the layers are individually extruded, before being joined together under pressure (i.e. lamination conditions). As would be understood by the person skilled in the art, layers formed via co-extrusion can be distinguished from layers formed by lamination by a number of key observations, including, but not limited to, the morphology of the polymers at the interface, the propensity for laminated films to undergo delamination and the mechanical properties of the resultant films.

The requirement that the first layer (A), the second layer (B), and the third layer (C) are co-extruded layers means that these layers have necessarily been formed in the same co-extrusion process. A process wherein the first layer (A) and the second layer (B) are formed by co-extrusion, the third layer (C) and a further layer (D) are formed by co-extrusion, and then the two co-extruded multilayers films subsequently laminated to form a A/B/C/D film would not meet the requirements that the first layer (A), the second layer (B), and the third layer (C) are co-extruded layers, within the meaning of the present invention.

It is particularly preferred that no further layers are present, in other words, the film consists, in the given order, of the first layer (A), the second layer (B) and the third layer (C), which are in adherent contact and preferably formed via co-extrusion, i.e. are co-extruded layers.

The total thickness of the film is preferably in the range from 70 to 1850 $\mu$m, more preferably in the range from 115 to 1530 $\mu$m, most preferably in the range from 145 to 1070 $\mu$m.

The thickness of the first layer (A) is preferably in the range from 30 to 1000 $\mu$m, more preferably in the range from 80 to 800 $\mu$m, most preferably in the range from 100 to 450 $\mu$m.

The thickness of the second layer (B) is preferably in the range from 10 to 100 $\mu$m, more preferably in the range from 20 to 80 $\mu$m, most preferably in the range from 25 to 70 $\mu$m.

The thickness of the third layer (C) is preferably in the range from 10 to 750 $\mu$m, more preferably in the range from 15 to 650 $\mu$m, most preferably in the range from 20 to 550 $\mu$m.

**Polypropylene composition (PC1)**

In the broadest sense, the polypropylene composition (PC1) of the first layer may be any polypropylene composition.

The polypropylene composition (PC1) comprises one or more polypropylenes, preferably at least one of said one or more polypropylenes is a polypropylene (PP1). In some embodiments, polypropylene (PP1) is the only polypropylene in the polypropylene composition (PC1).

It is preferred that the polypropylene (PP1) is a propylene-ethylene copolymer. It is especially preferred that the polypropylene (PP1) is a heterophasic propylene-ethylene copolymer (HECO1).

The heterophasic propylene-ethylene copolymer (HECO 1) comprises:

i) a crystalline matrix (M1) being a propylene homopolymer or propylene-ethylene copolymer, most preferably a propylene homopolymer; and
ii) an amorphous propylene-ethylene elastomer (E1) that is dispersed in said crystalline matrix (M1).

It is preferred that the crystalline matrix (M1) is free from 2,1-regiodefects, as determined by quantitative $^{13}$C-NMR spectroscopic analysis. This is an indication that the heterophasic propylene-ethylene copolymer (HECO1) has been polymerized in the presence of a Ziegler-Natta catalyst. As such, it is also preferred that the heterophasic propylene-ethylene copolymer (HECO 1) has been polymerized in the presence of a Ziegler-Natta catalyst.

The melt flow rate (MFR$_2$), determined according to ISO 1133 at 230 °C and 2.16 kg, of the polypropylene (PP1), more preferably the propylene-ethylene copolymer, most preferably the heterophasic propylene-ethylene copolymer (HECO1), is preferably in the range from 0.1 to 15 g/10 min, more preferably in the range from 0.2 to 10 g/10 min, most preferably in the range from 0.3 to 5.0 g/10 min.

The melting temperature ($T_m$), determined according to ISO 11357/part3/method C2, of the polypropylene (PP1), more preferably the propylene-ethylene copolymer, most preferably the heterophasic propylene-ethylene copolymer (HECO1), is preferably in the range from 158 to 172 °C, more preferably in the range from 160 to 171 °C, most preferably in the range from 162 to 170 °C.

The crystallization temperature ($T_c$), determined according to ISO 11357/part3/method C2, of the polypropylene (PP1), more preferably the propylene-ethylene copolymer, most preferably the heterophasic propylene-ethylene copolymer (HECO1), is preferably in the range from 110 to 135 °C, more preferably in the range from 113 to 134 °C, most preferably in the range from 115 to 133 °C.

The heterophasic propylene-ethylene copolymer (HECO1) may be characterized according to the CRYSTEX QC method using trichlorobenzene (TCB) as a solvent. This method is described below in the determination methods section. The crystalline fraction (CF) contains for the most part the matrix phase and only a small part of the elastomeric phase and the soluble fraction (SF) contains for the most part the elastomeric phase and only a small part of the matrix phase. In some cases, this method results in more useful data (than for example xylene cold soluble-based methods), since the crystalline fraction (CF) and the soluble fraction (SF) more accurately correspond to the matrix and elastomeric phases respectively. Due to the differences in the separation methods of xylene extraction and CRYSTEX QC method the properties of XCS/XCI fractions on the one hand and crystalline/soluble (CF/SF) fractions on the other hand are not exactly the same, meaning that the amounts of matrix phase and elastomeric phase can differ as well as the properties.

The heterophasic propylene-ethylene copolymer (HECO1) preferably has an ethylene content (C2(total)), determined by CRYSTEX QC analysis, in the range from 1.0 to 10.0 wt.-%, more preferably in the range from 2.0 to 9.0 wt.-%, most preferably in the range from 3.0 to 8.0 wt.-%.

The heterophasic propylene-ethylene copolymer (HECO1) preferably has a soluble fraction (SF) content, determined by CRYSTEX QC analysis, in the range from 6.0 to 20.0 wt.-%, more preferably in the range from 8.0 to 17.0 wt.-%, most preferably in the range from 10.0 to 15.0 wt.-%.

The heterophasic propylene-ethylene copolymer (HECO1) preferably has an ethylene content of the soluble fraction (C2(SF)), determined by CRYSTEX QC analysis, in the range from 20.0 to 50.0 wt.-%, more preferably in the range from 23.0 to 47.0 wt.-%, most preferably in the range from 25.0 to 45.0 wt.-%.

The heterophasic propylene-ethylene copolymer (HECO1) preferably has an intrinsic viscosity of the soluble fraction (iV(SF)), determined by CRYSTEX QC analysis, in the range from 1.00 to 5.00 dL/g, more preferably in the range from 1.20 to 4.50 dL/g, most preferably in the range from 1.50 to 4.00 dL/g.

The heterophasic propylene-ethylene copolymer (HECO1) preferably has a crystalline fraction (CF) content, determined by CRYSTEX QC analysis, in the range from 80.0 to 94.0 wt.-%, more preferably in the range from 83.0 to 92.0 wt.-%, most preferably in the range from 85.0 to 90.0 wt.-%.

The heterophasic propylene-ethylene copolymer (HECO1) preferably has an ethylene content of the crystalline fraction (C2(CF)), determined by CRYSTEX QC analysis, in the range from 1.0 to 5.0 wt.-%, more preferably in the range from 1.2 to 4.7 wt.-%, most preferably in the range from 1.5 to 4.0 wt.-%.

The heterophasic propylene-ethylene copolymer (HECO1) preferably has an intrinsic viscosity of the crystalline fraction (iV(CF)), determined by CRYSTEX QC analysis, in the range from 2.00 to 5.50 dL/g, more preferably in the range from 2.10 to 5.00 dL/g, most preferably in the range from 2.20 to 4.50 dL/g.

The heterophasic propylene-ethylene copolymer (HECO1) preferably has an intrinsic viscosity (iV(total)), determined by CRYSTEX QC analysis, in the range from 2.00 to 5.50 dL/g, more preferably in the range from 2.10 to 5.00 dL/g, most preferably in the range from 2.20 to 4.50 dL/g.

It is preferred that the polypropylene composition (PC1) further comprises one or more flame retardants (FR).

At least one of these one or more flame retardants comprises an inorganic phosphorus compound, preferably an inorganic phosphinate salt.

If present, the one or more flame retardants (FR) are preferably present in an amount in the range from 0.0 to 15.0 wt.-%, more preferably from 2.0 to 12.0 wt.-%, most preferably from 5.0 to 10.0 wt.-%, relative to the total weight of the polypropylene composition (PC1).

It is also preferred that the polypropylene composition (PC1) further comprises one or more pigments (P).

It is preferred that the one or more pigments is an inorganic pigment, more preferably a white inorganic pigment, most preferably titanium dioxide.

The titanium dioxide is preferably in a form of rutile. Rutile is a mineral that is primarily based on titanium dioxide and has a tetragonal unit cell structure as well known in the art.

If present, the one or more pigments are preferably present in an amount in the range from 0.0 to 15.0 wt.-%, more preferably from 1.0 to 10.0 wt.-%, most preferably from 3.0 to 7.0 wt.-%, relative to the total weight of the polypropylene composition (PC1).

Another optional component of the polypropylene composition (PC1) is one or more further additives (A1) other than flame retardants and pigments.

If present, the one or more further additives (A1) are provided in an amount in the range from 0.0 to 5.0 wt.-%,

relative to the total weight of the polypropylene composition (PC1).

The selection of suitable additives for the polypropylene composition (PC1) is within the general knowledge of the person skilled in the art.

For example, the one or more further additives (A1) may be selected from the group consisting of antioxidants, stabilizers, fillers, nucleating agents, and antistatic agents.

Such additives are generally commercially available and are described, for example, in "Plastic Additives Handbook", pages 871 to 873, 5th edition, 2001 of Hans Zweifel.

It is understood that the content of additives (A1), given with respect to the total weight of the polypropylene composition (PC1), includes any carrier polymers used to introduce the additives to said polypropylene composition (PC1), i.e. masterbatch carrier polymers. An example of such a carrier polymer would be a polypropylene homopolymer in the form of powder.

The content of additives (A1) given with respect to the total weight of the polypropylene composition (PC1), also includes any carrier polymers used to introduce the one or more pigments to said polypropylene composition (PC1), i.e. masterbatch carrier polymers.

Any pigments present in the polyolefin composition do not count towards the content of one or more further additives, rather these are present as the one or more pigments (P), as described above.

It is preferred that the polyolefin composition (PC1) has a flame retardance of VTM-0, when determined according to the UL94 test method on 300 $\mu$m cast film specimens.

**Polyolefin composition (PC2)**

The polyolefin composition (PC2) of the second layer comprises:

i) the propylene-ethylene copolymer (PP2) having a melting temperature ($T_m$), determined according to ISO 11357/part3/method C2, in the range from 130 to 150 °C;
ii) the first ethylene/$C_4$-$C_{10}$ alpha olefin copolymer (PE1) having a melting temperature ($T_m$), determined according to ISO 11357/part3/method C2, in the range from 30 to 60 °C.

In addition to the propylene-ethylene copolymer (PP2) and the first ethylene/$C_4$-$C_{10}$ alpha olefin copolymer (PE1), the polyolefin composition (PC2) may further comprise a second ethylene/$C_4$-$C_{10}$ alpha olefin copolymer (PE2) comprising one or more $C_4$-$C_{10}$ alpha olefin comonomer units that is different to the first ethylene/$C_4$-$C_{10}$ alpha olefin copolymer (PE1), and/or a polar modified polypropylene (PMP), and/or one or more additives (A2).

The polyolefin composition (PC2) of the second layer thus comprises, more preferably consists of:

i) the propylene-ethylene copolymer (PP2);
ii) the first ethylene/$C_4$-$C_{10}$ alpha olefin copolymer (PE1);
iii) optionally, the second ethylene/$C_4$-$C_{10}$ alpha olefin copolymer (PE2);
iv) optionally the polar modified polypropylene; and
v) optionally one or more additives (A2).

If present, the one or more further additives (A2) are provided in an amount in the range from 0.0 to 5.0 wt.-%, relative to the total weight of the polyolefin composition (PC2).

The selection of suitable additives for the polyolefin composition (PC2) is within the general knowledge of the person skilled in the art.

For example, the one or more further additives (A2) may be selected from the group consisting of antioxidants, stabilizers, fillers, nucleating agents, and antistatic agents.

Such additives are generally commercially available and are described, for example, in "Plastic Additives Handbook", pages 871 to 873, 5th edition, 2001 of Hans Zweifel.

It is understood that the content of additives (A2), given with respect to the total weight of the polyolefin composition (PC2), includes any carrier polymers used to introduce the additives to said polyolefin composition (PC2), i.e. masterbatch carrier polymers. An example of such a carrier polymer would be a polypropylene homopolymer in the form of powder.

It is preferred that the polyolefin composition (PC2) comprises, more preferably consists of:

a) an amount in the range from 50.0 to 97.0 wt.-%, more preferably from 60.0 to 95.0 wt.-%, most preferably from 70.0 to 93.0 wt.-%, relative to the total weight of the polyolefin composition (PC2), of the propylene-ethylene copolymer (PP2), more preferably the heterophasic propylene-ethylene copolymer (HECO2);
b) an amount in the range from 3.0 to 30.0 wt.-%, more preferably from 5.0 to 20.0 wt.-%, most preferably from 7.0 to 15.0 wt.-%, relative to the total weight of the polyolefin composition (PC2), of the first ethylene/$C_4$-$C_{10}$ alpha olefin copolymer (PE1);

c) optionally, an amount in the range from 0.0 to 20.0 wt.-%, more preferably from 2.0 to 15.0 wt.-%, most preferably from 4.0 to 12.0 wt.-%, relative to the total weight of the polyolefin composition (PC2), of the second ethylene/ $C_4$-$C_{10}$ alpha olefin copolymer (PE2);

d) optionally, an amount in the range from 0.0 to 20.0 wt.-%, more preferably from 2.0 to 15.0 wt.-%, most preferably from 4.0 to 12.0 wt.-%, relative to the total weight of the polyolefin composition (PC2), of the polar modified polypropylene (PMP), more preferably the maleic anhydride-grafted polypropylene (MAH-PP); and

e) optionally, an amount in the range from 0.0 to 5.0 wt.-%, relative to the total weight of the polyolefin composition (PC2), of one or more additives (A2).

In one embodiment the polyolefin composition (PC2) comprises, more preferably consists of:

a) an amount in the range from 50.0 to 97.0 wt.-%, relative to the total weight of the polyolefin composition (PC2), of the propylene-ethylene copolymer (PP2), more preferably the heterophasic propylene-ethylene copolymer (HECO2);

b) an amount in the range from 3.0 to 30.0 wt.-%, relative to the total weight of the polyolefin composition (PC2), of the first ethylene/$C_4$-$C_{10}$ alpha olefin copolymer (PE1);

c) optionally, an amount in the range from 0.0 to 20.0 wt.-%, relative to the total weight of the polyolefin composition (PC2), of the second ethylene/ $C_4$-$C_{10}$ alpha olefin copolymer (PE2);

d) optionally, an amount in the range from 0.0 to 20.0 wt.-%, relative to the total weight of the polyolefin composition (PC2), of the polar modified polypropylene (PMP), more preferably the maleic anhydride-grafted polypropylene (MAH-PP); and

e) optionally, an amount in the range from 0.0 to 5.0 wt.-%, relative to the total weight of the polyolefin composition (PC2), of one or more additives (A2).

In another embodiment, the polyolefin composition (PC2) comprises, more preferably consists of:

a) an amount in the range from 60.0 to 95.0 wt.-%, relative to the total weight of the polyolefin composition (PC2), of the propylene-ethylene copolymer (PP2), more preferably the heterophasic propylene-ethylene copolymer (HECO2);

b) an amount in the range from 5.0 to 20.0 wt.-%, relative to the total weight of the polyolefin composition (PC2), of the first ethylene/$C_4$-$C_{10}$ alpha olefin copolymer (PE1);

c) optionally, an amount in the range from 2.0 to 15.0 wt.-%, relative to the total weight of the polyolefin composition (PC2), of the second ethylene/ $C_4$-$C_{10}$ alpha olefin copolymer (PE2);

d) optionally, an amount in the range from 2.0 to 15.0 wt.-%, relative to the total weight of the polyolefin composition (PC2), of the polar modified polypropylene (PMP), more preferably the maleic anhydride-grafted polypropylene (MAH-PP); and

e) optionally, an amount in the range from 0.0 to 5.0 wt.-%, relative to the total weight of the polyolefin composition (PC2), of one or more additives (A2).

In yet another embodiment, the polyolefin composition (PC2) comprises, more preferably consists of:

a) an amount in the range from 70.0 to 93.0 wt.-%, relative to the total weight of the polyolefin composition (PC2), of the propylene-ethylene copolymer (PP2), more preferably the heterophasic propylene-ethylene copolymer (HECO2);

b) an amount in the range from 7.0 to 15.0 wt.-%, relative to the total weight of the polyolefin composition (PC2), of the first ethylene/$C_4$-$C_{10}$ alpha olefin copolymer (PE1);

c) optionally, an amount in the range from 4.0 to 12.0 wt.-%, relative to the total weight of the polyolefin composition (PC2), of the second ethylene/ $C_4$-$C_{10}$ alpha olefin copolymer (PE2);

d) optionally, an amount in the range from 4.0 to 12.0 wt.-%, relative to the total weight of the polyolefin composition (PC2), of the polar modified polypropylene (PMP), more preferably the maleic anhydride-grafted polypropylene (MAH-PP); and

e) optionally, an amount in the range from 0.0 to 5.0 wt.-%, relative to the total weight of the polyolefin composition (PC2), of one or more additives (A2).

In one embodiment, the polyolefin composition (PC2) of the second layer thus comprises, more preferably consists of:

i) the propylene-ethylene copolymer (PP2);

ii) the first ethylene/$C_4$-$C_{10}$ alpha olefin copolymer (PE1);

iii) optionally, one or more additives (A2).

In this embodiment, the polyolefin composition (PC2) comprises, more preferably consists of:

a) an amount in the range from 70.0 to 97.0 wt.-%, more preferably from 80.0 to 95.0 wt.-%, most preferably from 85.0 to 93.0 wt.-%, relative to the total weight of the polyolefin composition (PC2), of the propylene-ethylene copolymer (PP2), more preferably the heterophasic propylene-ethylene copolymer (HECO2);
b) an amount in the range from 3.0 to 30.0 wt.-%, more preferably from 5.0 to 20.0 wt.-%, most preferably from 7.0 to 15.0 wt.-%, relative to the total weight of the polyolefin composition (PC2), of the first ethylene/$C_4$-$C_{10}$ alpha olefin copolymer (PE1); and
c) optionally, an amount in the range from 0.0 to 5.0 wt.-%, relative to the total weight of the polyolefin composition (PC2), of one or more additives (A2).

In another embodiment, the polyolefin composition (PC2) of the second layer thus comprises, more preferably consists of:

i) the propylene-ethylene copolymer (PP2);
ii) the first ethylene/$C_4$-$C_{10}$ alpha olefin copolymer (PE1);
iii) the second ethylene/$C_4$-$C_{10}$ alpha olefin copolymer (PE2);
iv) optionally, one or more additives (A2).

In this embodiment, the polyolefin composition (PC2) comprises, more preferably consists of:

a) an amount in the range from 50.0 to 97.0 wt.-%, more preferably from 60.0 to 93.0 wt.-%, most preferably from 70.0 to 89.0 wt.-%, relative to the total weight of the polyolefin composition (PC2), of the propylene-ethylene copolymer (PP2), more preferably the heterophasic propylene-ethylene copolymer (HECO2);
b) an amount in the range from 3.0 to 30.0 wt.-%, more preferably from 5.0 to 20.0 wt.-%, most preferably from 7.0 to 15.0 wt.-%, relative to the total weight of the polyolefin composition (PC2), of the first ethylene/$C_4$-$C_{10}$ alpha olefin copolymer (PE1);
c) an amount in the range from 0.0 to 20.0 wt.-%, more preferably from 2.0 to 15.0 wt.-%, most preferably from 4.0 to 12.0 wt.-%, relative to the total weight of the polyolefin composition (PC2), of the second ethylene/ $C_4$-$C_{10}$ alpha olefin copolymer (PE2);
d) optionally, an amount in the range from 0.0 to 5.0 wt.-%, relative to the total weight of the polyolefin composition (PC2), of one or more additives (A2).

In a further embodiment, the polyolefin composition (PC2) of the second layer thus comprises, more preferably consists of:

i) the propylene-ethylene copolymer (PP2);
ii) the first ethylene/$C_4$-$C_{10}$ alpha olefin copolymer (PE1);
iii) the polar modified polypropylene (PMP); and
iv) optionally, one or more additives (A2).

In this embodiment, the polyolefin composition (PC2) comprises, more preferably consists of:

a) an amount in the range from 50.0 to 97.0 wt.-%, more preferably from 60.0 to 93.0 wt.-%, most preferably from 70.0 to 89.0 wt.-%, relative to the total weight of the polyolefin composition (PC2), of the propylene-ethylene copolymer (PP2), more preferably the heterophasic propylene-ethylene copolymer (HECO2);
b) an amount in the range from 3.0 to 30.0 wt.-%, more preferably from 5.0 to 20.0 wt.-%, most preferably from 7.0 to 15.0 wt.-%, relative to the total weight of the polyolefin composition (PC2), of the first ethylene/$C_4$-$C_{10}$ alpha olefin copolymer (PE1);
c) an amount in the range from 0.0 to 20.0 wt.-%, more preferably from 2.0 to 15.0 wt.-%, most preferably from 4.0 to 12.0 wt.-%, relative to the total weight of the polyolefin composition (PC2), of the polar modified polypropylene (PMP), more preferably the maleic anhydride-grafted polypropylene (MAH-PP); and
d) optionally, an amount in the range from 0.0 to 5.0 wt.-%, relative to the total weight of the polyolefin composition (PC2), of one or more additives (A2).

In yet another embodiment, the polyolefin composition (PC2) of the second layer thus comprises, more preferably consists of:

i) the propylene-ethylene copolymer (PP2);
ii) the first ethylene/$C_4$-$C_{10}$ alpha olefin copolymer (PE1);
iii) the second ethylene/$C_4$-$C_{10}$ alpha olefin copolymer (PE2);
iv) the polar modified polypropylene (PMP); and
v) optionally one or more additives (A2).

In this embodiment, the polyolefin composition (PC2) comprises, more preferably consists of:

a) an amount in the range from 50.0 to 97.0 wt.-%, more preferably from 60.0 to 91.0 wt.-%, most preferably from 70.0 to 85.0 wt.-%, relative to the total weight of the polyolefin composition (PC2), of the propylene-ethylene copolymer (PP2), more preferably the heterophasic propylene-ethylene copolymer (HECO2);
b) an amount in the range from 3.0 to 30.0 wt.-%, more preferably from 5.0 to 20.0 wt.-%, most preferably from 7.0 to 15.0 wt.-%, relative to the total weight of the polyolefin composition (PC2), of the first ethylene/$C_4$-$C_{10}$ alpha olefin copolymer (PE1);
c) an amount in the range from 0.0 to 20.0 wt.-%, more preferably from 2.0 to 15.0 wt.-%, most preferably from 4.0 to 12.0 wt.-%, relative to the total weight of the polyolefin composition (PC2), of the second ethylene/ $C_4$-$C_{10}$ alpha olefin copolymer (PE2);
d) an amount in the range from 0.0 to 20.0 wt.-%, more preferably from 2.0 to 15.0 wt.-%, most preferably from 4.0 to 12.0 wt.-%, relative to the total weight of the polyolefin composition (PC2), of the polar modified polypropylene (PMP), more preferably the maleic anhydride-grafted polypropylene (MAH-PP); and
e) optionally, an amount in the range from 0.0 to 5.0 wt.-%, relative to the total weight of the polyolefin composition (PC2), of one or more additives (A2).

**Propylene-ethylene copolymer (PP2)**

In the broadest sense, the propylene-ethylene copolymer (PP2) of the polyolefin composition (PC2) may be any propylene-ethylene copolymer having a melting temperature ($T_m$), determined according to ISO 11357/part3/method C2, in the range from 130 to 150 °C.
It is preferred that the propylene-ethylene copolymer (PP2) is a heterophasic propylene-ethylene copolymer (HECO2).
The heterophasic propylene-ethylene copolymer (HECO2) comprises:

i) a crystalline matrix (M2) being a propylene homopolymer or propylene-ethylene copolymer, most preferably a propylene-ethylene copolymer; and
ii) an amorphous propylene-ethylene elastomer (E2) that is dispersed in said crystalline matrix (M2).

It is preferred that the crystalline matrix (M2) is free from 2,1-regiodefects, as determined by quantitative $^{13}$C-NMR spectroscopic analysis. This is an indication that the heterophasic propylene-ethylene copolymer (HECO2) has been polymerized in the presence of a Ziegler-Natta catalyst. As such, it is also preferred that the heterophasic propylene-ethylene copolymer (HECO1) has been polymerized in the presence of a Ziegler-Natta catalyst.
The melt flow rate ($MFR_2$), determined according to ISO 1133 at 230 °C and 2.16 kg, of the propylene-ethylene copolymer (PP2), more preferably the heterophasic propylene-ethylene copolymer (HECO2), is preferably in the range from 0.5 to 10 g/10 min, more preferably in the range from 1.0 to 8.0 g/10 min, most preferably in the range from 2.0 to 6.0 g/10 min.
The melting temperature ($T_m$), determined according to ISO 11357/part3/method C2, of the propylene-ethylene copolymer (PP2), more preferably the heterophasic propylene-ethylene copolymer (HECO2), is in the range from 130 to 150 °C, more preferably in the range from 135 to 148 °C, most preferably in the range from 140 to 140 °C.
The crystallization temperature ($T_c$), determined according to ISO 11357/part3/method C2, of the propylene-ethylene copolymer (PP2), more preferably the heterophasic propylene-ethylene copolymer (HECO2), is preferably in the range from 95 to 110 °C, more preferably in the range from 98 to 107 °C, most preferably in the range from 100 to 105 °C.
The heterophasic propylene-ethylene copolymer (HECO2) may be characterized according to the CRYSTEX QC method using trichlorobenzene (TCB) as a solvent. This method is described below in the determination methods section. The crystalline fraction (CF) contains for the most part the matrix phase and only a small part of the elastomeric phase and the soluble fraction (SF) contains for the most part the elastomeric phase and only a small part of the matrix phase. In some cases, this method results in more useful data (than for example xylene cold soluble-based methods), since the crystalline fraction (CF) and the soluble fraction (SF) more accurately correspond to the matrix and elastomeric phases respectively. Due to the differences in the separation methods of xylene extraction and CRYSTEX QC method the properties of XCS/XCI fractions on the one hand and crystalline/soluble (CF/SF) fractions on the other hand are not exactly the same, meaning that the amounts of matrix phase and elastomeric phase can differ as well as the properties.

The heterophasic propylene-ethylene copolymer (HECO2) preferably has an ethylene content (C2(total)), determined by CRYSTEX QC analysis, in the range from 5.0 to 15.0 wt.-%, more preferably in the range from 6.0 to 12.0 wt.-%, most preferably in the range from 7.0 to 10.0 wt.-%.

The heterophasic propylene-ethylene copolymer (HECO2) preferably has a soluble fraction (SF) content, determined by CRYSTEX QC analysis, in the range from 10.0 to 25.0 wt.-%, more preferably in the range from 12.0 to 22.0 wt.-%, most preferably in the range from 14.0 to 19.0 wt.-%.

The heterophasic propylene-ethylene copolymer (HECO2) preferably has an ethylene content of the soluble fraction (C2(SF)), determined by CRYSTEX QC analysis, in the range from 15.0 to 35.0 wt.-%, more preferably in the range from 20.0 to 30.0 wt.-%, most preferably in the range from 23.0 to 27.0 wt.-%.

The heterophasic propylene-ethylene copolymer (HECO2) preferably has an intrinsic viscosity of the soluble fraction (iV(SF)), determined by CRYSTEX QC analysis, in the range from 0.80 to 2.00 dL/g, more preferably in the range from 1.00 to 1.80 dL/g, most preferably in the range from 1.20 to 1.60 dL/g.

The heterophasic propylene-ethylene copolymer (HECO2) preferably has a crystalline fraction (CF) content, determined by CRYSTEX QC analysis, in the range from 75.0 to 90.0 wt.-%, more preferably in the range from 78.0 to 88.0 wt.-%, most preferably in the range from 81.0 to 84.0 wt.-%.

The heterophasic propylene-ethylene copolymer (HECO2) preferably has an ethylene content of the crystalline fraction (C2(CF)), determined by CRYSTEX QC analysis, in the range from 1.0 to 8.0 wt.-%, more preferably in the range from 2.0 to 7.0 wt.-%, most preferably in the range from 3.0 to 6.0 wt.-%.

The heterophasic propylene-ethylene copolymer (HECO2) preferably has an intrinsic viscosity of the crystalline fraction (iV(CF)), determined by CRYSTEX QC analysis, in the range from 1.80 to 3.00 dL/g, more preferably in the range from 2.00 to 2.80 dL/g, most preferably in the range from 2.20 to 2.60 dL/g.

The heterophasic propylene-ethylene copolymer (HECO2) preferably has an intrinsic viscosity (iV(total)), determined by CRYSTEX QC analysis, in the range from 1.60 to 2.80 dL/g, more preferably in the range from 1.80 to 2.60 dL/g, most preferably in the range from 2.00 to 2.40 dL/g.

### First ethylene/$C_4$-$C_{10}$ alpha olefin copolymer (PE1)

In the broadest sense, the first ethylene/$C_4$-$C_{10}$ alpha olefin copolymer (PE1) of the polyolefin composition (PC2) may be any ethylene/$C_4$-$C_{10}$ alpha olefin copolymer having a melting temperature ($T_m$), determined according to ISO 11357/part3/method C2, in the range from 30 to 60 °C.

It is particularly preferred that the first ethylene/$C_4$-$C_{10}$ alpha olefin copolymer (PE1) is an ethylene/$C_6$-$C_{10}$ alpha olefin copolymer, more preferably an ethylene/$C_6$-$C_8$ alpha olefin copolymer, most preferably an ethylene-octene copolymer.

The first ethylene/$C_4$-$C_{10}$ alpha olefin copolymer (PE1), more preferably the ethylene-octene copolymer, has a melting temperature ($T_m$), determined according to ISO 11357/part3/method C2, in the range from 30 to 60 °C, more preferably in the range from 38 to 55 °C, most preferably in the range from 45 to 50 °C.

The first ethylene/$C_4$-$C_{10}$ alpha olefin copolymer (PE1), more preferably the ethylene-octene copolymer, preferably has a density, determined according to ISO 1183-187, in the range from 850 to 890 kg/m$^3$, more preferably in the range from 860 to 880 kg/m$^3$, most preferably in the range from 865 to 875 kg/m$^3$.

The first ethylene/$C_4$-$C_{10}$ alpha olefin copolymer (PE1), more preferably the ethylene-octene copolymer, preferably has a melt flow rate (MFR$_2$), determined according to ISO 1133 at 190 °C and 2.16 kg, in the range from 1.0 to 15.0 g/10 min, more preferably in the range from 3.0 to 12.0 g/10 min, most preferably in the range from 5.0 to 10.0 g/10 min.

The first ethylene/$C_4$-$C_{10}$ alpha olefin copolymer (PE1), more preferably the ethylene-octene copolymer, preferably has a comonomer content, more preferably a 1-octene content, determined according to quantitative $^{13}$C-NMR spectroscopic analysis, in the range from 5 to 15 mol-%, more preferably in the range from 7 to 14 mol-%, most preferably in the range from 9 to 13 mol-%.

### Second ethylene/$C_4$-$C_{10}$ alpha olefin copolymer (PE2)

In the broadest sense, the second ethylene/$C_4$-$C_{10}$ alpha olefin copolymer (PE2) may be any ethylene copolymer comprising one or more $C_4$-$C_{10}$ alpha olefin comonomer units that is different to the different to the first ethylene/$C_4$-$C_{10}$ alpha olefin copolymer (PE1).

It is preferred that the second ethylene/$C_4$-$C_{10}$ alpha olefin copolymer (PE2) comprises two or more $C_4$-$C_{10}$ alpha olefin comonomer units, more preferably two or more $C_4$-$C_8$ alpha olefin comonomer units, yet more preferably two or more

$C_4$-$C_6$ alpha olefin comonomer units. Most preferably, the second ethylene/$C_4$-$C_{10}$ alpha olefin copolymer (PE2) is a terpolymer comprising units derived from ethylene, 1-butene, and 1-hexene.

It is preferred that the second ethylene/$C_4$-$C_{10}$ alpha olefin copolymer (PE2), more preferably the terpolymer comprising units derived from ethylene, 1-butene, and 1-hexene, has a density, determined according to ISO 1183-187, in the range from 900 to 940 kg/m$^3$, more preferably in the range from 910 to 930 kg/m$^3$, most preferably in the range from 913 to 923 kg/m$^3$.

It is preferred that the second ethylene/$C_4$-$C_{10}$ alpha olefin copolymer (PE2), more preferably the terpolymer comprising units derived from ethylene, 1-butene, and 1-hexene, has a melt flow rate (MFR$_2$), determined according to ISO 1133 at 190 °C and 2.16 kg, in the range from 0.3 to 5.0 g/10 min, more preferably in the range from 0.5 to 3.0 g/10 min, most preferably in the range from 0.7 to 2.0 g/10 min.

It is preferred that the second ethylene/$C_4$-$C_{10}$ alpha olefin copolymer (PE2), more preferably the terpolymer comprising units derived from ethylene, 1-butene, and 1-hexene, has a 1-butene (C4) content, determined according to quantitative $^{13}$C-NMR spectroscopic analysis, in the range from 0.05 to 1.00 mol-%, more preferably in the range from 0.10 to 0.70 mol-%, most preferably in the range from 0.20 to 0.50 mol-%.

It is preferred that the second ethylene/$C_4$-$C_{10}$ alpha olefin copolymer (PE2), more preferably the terpolymer comprising units derived from ethylene, 1-butene, and 1-hexene, has a 1-hexene (C6) content, determined according to quantitative $^{13}$C-NMR spectroscopic analysis, in the range from 1.0 to 6.0 mol-%, more preferably in the range from 1.5 to 5.0 mol-%, most preferably in the range from 2.0 to 4.0 mol-%.

It is preferred that the second ethylene/$C_4$-$C_{10}$ alpha olefin copolymer (PE2), more preferably the terpolymer comprising units derived from ethylene, 1-butene, and 1-hexene, has a melting temperature (T$_m$), determined according to ISO 11357/part3/method C2, in the range from 110 to 135 °C, more preferably in the range from 115 to 130 °C, most preferably in the range from 118 to 125 °C.

**Polar modified polypropylene (PMP)**

In the broadest sense, the polar modified polypropylene (PMP) may be any suitable polar modified polypropylene.

It is, however, preferred that the polar modified polypropylene (PMP) is a maleic anhydride-grafted polypropylene (MAH-PP).

The person skilled in the art is aware of many commercially available maleic-anhydride-grafted polypropylenes, as well as well-established methods for preparing maleic-anhydride-grafted polypropylenes.

It is preferred that the polar modified polypropylene (PMP), more preferably the maleic anhydride-grafted polypropylene (MAH-PP), has a density, determined according to ISO 1183-187, in the range from 910 to 950 kg/m$^3$, more preferably in the range from 920 to 940 kg/m$^3$, most preferably in the range from 930 to 937 kg/m$^3$.

It is preferred that the polar modified polypropylene (PMP), more preferably the maleic anhydride-grafted polypropylene (MAH-PP), has a maleic anhydride content, determined according to FT-IR analysis, in the range from 1.0 to 5.0 wt.-% , more preferably in the range from 2.0 to 4.0 wt.-%, most preferably in the range from 2.5 to 3.5 wt.-%.

**Polyethylene composition (PC3)**

The polyethylene composition (PC3) of the third layer may, in the broadest sense, be any polyethylene composition.

It is, however, preferred that the polyethylene composition (PC3) comprises an ethylene polymer selected from the group consisting of:

a) an ethylene copolymer (c1) comprising monomer units of ethylene and one or more polar comonomer units selected from the group consisting of ($C_1$-$C_6$)-alkyl acrylate and ($C_1$-$C_6$)-alkyl ($C_1$-$C_6$)-alkylacrylate comonomer units, said ethylene copolymer (c1) additionally bearing silane units;

b) an ethylene polymer (c2) bearing silane units, wherein the ethylene polymer (c2) does not comprise polar comonomer units selected from the group consisting of ($C_1$-$C_6$)-alkyl acrylate and ($C_1$-$C_6$)-alkyl ($C_1$-$C_6$)-alkylacrylate comonomer units;

c) a copolymer of ethylene (c3) with vinyl acetate comonomer units; and

d) an ethylene/$C_3$-$C_{10}$ alpha olefin copolymer (c4) having a density, determined according to ISO 1183-187, in the range from 850 to 900 kg/m$^3$.

For each of ethylene copolymer (c1) and ethylene polymer (c2), it is preferred that the ethylene polymer has a density, determined according to ISO 1183-187, in the range from 920 to 960 kg/m$^3$, more preferably 930 to 955 kg/m$^3$, most preferably 940 to 950 kg/m$^3$.

For each of ethylene copolymer (c1) and ethylene polymer (c2), it is preferred that the ethylene polymer has a melt flow rate ($MFR_2$), determined according to ISO 1133 at 190 °C and 2.16 kg, in the range from 1.0 to 10.0 g/10 min, more preferably in the range from 2.0 to 7.0 g/10 min, most preferably in the range from 3.0 to 5.0 g/10 min.

For each of ethylene copolymer (c1) and ethylene polymer (c2), it is preferred that the ethylene polymer has a melting temperature ($T_m$), determined according to ISO 11357/part3/method C2, in the range from 85 to 115 °C, more preferably in the range from 87 to 100 °C, most preferably in the range from 90 to 95 °C.

The ethylene polymers (c1) and (c2) bear silane units. The silane units can be present as comonomer units of the ethylene polymer or as a compound grafted chemically to the ethylene polymer. Silane comonomer units means that the silane units are present in the ethylene polymer as comonomer units.

In case that the silane units are incorporated as comonomer units, the silane units are copolymerized as comonomer units with ethylene monomer units (and optionally other comonomer units, such as the polar comonomer units of ethylene copolymer (c1)) during the polymerization process of the ethylene polymer.

In the case that the silane units are incorporated into the copolymer of ethylene by grafting, the silane units are reacted chemically (also called as grafting), with the ethylene polymer after the polymerization of the ethylene polymer. The chemical reaction, i.e. grafting, is performed typically using a radical forming agent such as peroxide. In general, copolymerisation and grafting of the silane units to ethylene are well known techniques and well documented in the polymer field and within the skills of the person skilled in the art.

It is also well known that the use of peroxide in the grafting embodiment decreases the melt flow rate (MFR) of an ethylene polymer due to a simultaneous crosslinking reaction. As a result, the grafting embodiment can bring limitation to the choice of the MFR of the copolymer of ethylene as a starting polymer, which choice of MFR can have an adverse impact on the quality of the polymer at the end use application. Furthermore, the by-products formed from peroxide during the grafting process can have an adverse impact on the use of the polyethylene composition (PC3) at end use application.

The copolymerisation of the silane comonomer units into the polymer backbone provides more uniform incorporation of the units compared to grafting of the units. Moreover, compared to grafting, the copolymerisation does not require the addition of peroxide after the polymer is produced.

It is preferred that the silane units of ethylene copolymer (c1) and/or (c2) are present as silane-containing comonomer units. In the case of ethylene copolymer (c1), the silane units are copolymerized as comonomer units together with the ethylene monomer units and the polar comonomer units during the polymerization process of the ethylene copolymer (c1). In the case of ethylene polymer (c2), the silane units are copolymerized as comonomer units together with the ethylene monomer units during the polymerization process of the ethylene polymer (c2).

The ethylene copolymer (c1) and/or ethylene polymer (c2) may be commercially available or can be prepared according to, or analogously to, known polymerization processes reported in the chemical literature.

The polymerization process of ethylene copolymer (c1) and/or ethylene polymer (c2) is preferably a high pressure polymerization process using free radical polymerization in the presence of one or more initiator(s) and optionally using a chain transfer agent (CTA) to control the MFR of the polymer.

A suitable high pressure (HP) process with suitable polymerization conditions is described in WO 2018/141672.

Such HP polymerisation results in a so called low density polymer of ethylene (LDPE), herein to ethylene copolymer (c1) and/or ethylene polymer (c2). The term LDPE has a well-known meaning in the polymer field and describes the nature of polyethylene produced in HP, i.e. the typical features, such as different branching architecture, to distinguish the LDPE from PE produced in the presence of an olefin polymerisation catalyst (also known as a coordination catalyst). Although the term LDPE is an abbreviation for low density polyethylene, the term is understood not to limit the density range, but covers the LDPE-like HP polyethylenes with low, medium and higher densities.

The silane units, more preferably the silane comonomer units, of ethylene copolymer (c1) and/or (c2) are preferably a hydrolysable unsaturated silane compound represented by the formula (I)

$$R^1 SiR^2_q Y_{3-q} \qquad \text{(I)}$$

wherein

$R^1$ is an ethylenically unsaturated hydrocarbyl, hydrocarbyloxy or (meth)acryloxy hydrocarbyl group, each $R^2$ is independently an aliphatic saturated hydrocarbyl group,
Y which may be the same or different, is a hydrolysable organic group and
q is 0, 1 or 2;

Further suitable silane comonomer unit is e.g. gamma-(meth)acryl-oxypropyl trimethoxysilane, gamma(meth) acryloxypropyl triethoxysilane, and vinyl triacetoxysilane, or combinations of two or more thereof.

One suitable subgroup of compound of formula (I) is an unsaturated silane compound or, preferably, comonomer of formula (II)

$$CH_2=CHSi(OA)_3 \qquad (II)$$

wherein each A is independently a hydrocarbyl group having 1-8 carbon atoms, suitably 1-4 carbon atoms.

The silane unit, or preferably, the comonomer, of the invention, is preferably the compound of formula (II) which is vinyl trimethoxysilane, vinyl bismethoxyethoxysilane, vinyl triethoxysilane, more preferably vinyl trimethoxysilane or vinyl triethoxysilane.

The amount of the silane units, preferably silane comonomer units, present in the ethylene copolymer (c1) and/or (c2), is preferably in the range of from 1.0 to 5.0 wt.-%, more preferably from 1.1 to 2.0 wt.-%, most preferably from 1.2 to 1.6 wt.-%, based on the total weight of the ethylene copolymer (c1) and/or (c2).

The amount of the silane units, preferably silane comonomer units, present in the ethylene copolymer (c1) and/or (c2), is preferably in the range of from 0.05 to 2.0 mol-%, more preferably from 0.10 to 1.0 mol-%, most preferably from 0.20 to 0.50 mol-%, based on the total weight of the ethylene copolymer (c1) and/or (c2).

It is particularly preferred that the polyethylene composition (PC3) comprises an ethylene copolymer (c1) comprising monomer units of ethylene and polar comonomer units selected from one or more of $(C_1-C_6)$-alkyl acrylate or $(C_1-C_6)$-alkyl $(C_1-C_6)$-alkylacrylate comonomer units, said ethylene copolymer (c1) additionally bearing silane units.

It is preferred that the polar comonomer units are selected from one or more $(C_1-C_6)$-alkyl acrylate comonomer units, more preferably from methyl acrylate (MA), ethyl acrylate (EA) or butyl acrylate (BA) comonomer units, most preferably from methyl acrylate comonomer units.

Without being bound by theory, methyl acrylate (MA) is the only acrylate which cannot go through the ester pyrolysis reaction, since does not have this reaction path. Therefore, the ethylene copolymer (c1) with MA comonomer units does not form any harmful free acid (acrylic acid) degradation products at high temperatures, whereby the ethylene copolymer (c1) comprising methyl acrylate comonomer units contributes to good quality and life cycle of the end article thereof. This is not the case e.g. with vinyl acetate units of EVA, since EVA forms harmful acetic acid degradation products at high temperatures. Moreover, the other acrylates like ethyl acrylate (EA) or butyl acrylate (BA) can go through the ester pyrolysis reaction, and if degrade, would form volatile olefinic by-products.

The amount of polar comonomer units present in the ethylene copolymer (c1) is preferably in the range of from 15 to 30 wt.-%, more preferably from 18 to 27 wt.-%, most preferably from 20 to 25 wt.-%, based on the total weight of the ethylene copolymer (c1).

The amount of polar comonomer units present in the ethylene copolymer (c1) is preferably in the range of from 5 to 12 mol-%, more preferably from 6 to 11 mol-%, most preferably from 7 to 10 mol-%, based on the total weight of the ethylene copolymer (c1).

It is most preferred that the polyethylene composition (PC3) comprises an ethylene copolymer (c1) that is a copolymer of ethylene with methyl acrylate, ethyl acrylate or butyl acrylate comonomer units and with vinyl trimethoxysilane, vinyl bismethoxyethoxysilane, vinyl triethoxysilane or vinyl trimethoxysilane comonomer units, more preferably with vinyl trimethoxysilane or vinyl triethoxysilane comonomer units.

More preferably the ethylene copolymer (c1) is a copolymer of ethylene with methyl acrylate comonomer units and with vinyl trimethoxysilane, vinyl bismethoxyethoxysilane, vinyl triethoxysilane or vinyl trimethoxysilane comonomer, still more preferably a copolymer of ethylene with methyl acrylate comonomer units and with vinyl trimethoxysilane or vinyl triethoxysilane comonomer units, most preferably a terpolymer (PE3) of ethylene, methyl acrylate (MA), and vinyltrimethoxysilane (VTMS).

The terpolymer (PE3) preferably has one or more, preferably all, of the following properties:

a) a density, determined according to ISO 1183-187, in the range from 920 to 960 kg/m$^3$, more preferably 940 to 955 kg/m$^3$, most preferably 945 to 950 kg/m$^3$;

b) a melt flow rate (MFR$_2$), determined according to ISO 1133 at 190 °C and 2.16 kg, in the range from 1.0 to 10.0 g/10 min, more preferably in the range from 2.0 to 7.0 g/10 min, most preferably in the range from 3.0 to 5.0 g/10 min;

c) a methyl acrylate (MA) content, determined according to quantitative $^1$H-NMR spectroscopic analysis, in the range from 15.0 to 30.0 wt.-%, more preferably in the range from 18.0 to 27.0 wt.-%, most preferably in the range from 20.0 to 25.0 wt.-%;

d) a vinyltrimethoxysilane (VTMS) content, determined according to quantitative $^1$H-NMR spectroscopic analysis, in the range from 1.0 to 5.0 wt.-%, more preferably in the range from 1.1 to 1.8 wt.-%, most preferably in the range from 1.2 to 1.6 wt.-%; and

e) a melting temperature (T$_m$), determined according to ISO 11357/part3/method C2, in the range from 85 to 115 °C, more preferably in the range from 87 to 100 °C, most preferably in the range from 90 to 95 °C.

In another preferred embodiment the polyethylene composition (PC3) comprises a copolymer of ethylene (c3) and vinyl acetate comonomer units (EVA).

The amount of the vinyl acetate (VA) comonomer units present in the copolymer of ethylene (c3) is preferably in the range of from 0.5 to 30.0 mol%, preferably from 2.5 to 20.0 mol%, still more preferably from 5.0 to 15.0 mol%, most preferably from 7.5 to 12.5 mol%, based on the total amount of monomer units in the copolymer of ethylene (c3).

The melt flow rate, $MFR_2$, of the copolymer of ethylene (c3) is preferably from 0.1 to 13 g/10 min, still more preferably from 1.0 to 50 g/10 min, more preferably from 5.0 to 45.0 g/10 min, more preferably from 7.5 to 40.0 g/10 min, most preferably from 10.0 to 35.0 g/10 min, when determined according to ISO 1133 at 190 °C and at a load of 2.16 kg.

The copolymer of ethylene (c3) preferably has a melting temperature of from 25 to 95°C, more preferably from 30°C to 90°C, still more preferably from 35°C to 85°C and most preferably from 40°C to 80°C. The preferable melting temperature is beneficial for instance for a lamination process, since the time of the melting/softening step can be reduced.

Preferably the density of the copolymer of ethylene (c3) is from 940 to 975 $kg/m^3$, preferably from 945 to 970 $kg/m^3$ and most preferably from 950 to 965 $kg/m^3$.

The copolymer of ethylene (c3) is preferably crosslinkable.

The copolymer of ethylene (c3) usually is commercially available but can be prepared according to or analogously to known polymerization processes described in the chemical literature.

Suitable commercially available copolymers of ethylene (c3) can be purchased e.g. from Hangzhou First Applied Material Co., Ltd (PR China).

In yet another preferred embodiment the polyethylene composition (PC3) comprises an ethylene/$C_3$-$C_{10}$ alpha olefin copolymer (c4), which has a density of from 850 to less than 900 $kg/m^3$, preferably from 860 to 890 $kg/m^3$, more preferably from 865 to 885 $kg/m^3$, determined according to ISO 1183. Said ethylene/$C_3$-$C_{10}$ alpha olefin copolymer (c4) qualifies as very low-density polyethylene (VLDPE).

The very low-density polyethylene (VLDPE) can be identified as elastomer. According to the IUPAC definition an elastomer is a polymer that displays rubber-like elasticity.

Polyethylene based elastomers are commercially available under the tradenames Queo™, Exact™, Engage™, F·RST® TF series and others.

The ethylene/$C_3$-$C_{10}$ alpha olefin copolymer (c4) preferably has a melt flow rate (ISO 1133, 2.16 kg, 190°C) of from 0.5 to 25.0 g/10 min, more preferably from 1.0 to 22.5 g/10 min, still more preferably from 2.5 to 20.0 g/10 min.

The ethylene/$C_3$-$C_{10}$ alpha olefin copolymer (c4) preferably has a melting temperature of from 25 to 95°C, more preferably from 30°C to 90°C, still more preferably from 35°C to 85°C and most preferably from 40°C to 80°C. The preferable melting temperature is beneficial for instance for a lamination process, since the time of the melting/softening step can be reduced.

The ethylene/$C_3$-$C_{10}$ alpha olefin copolymer (c4) is copolymer of ethylene and one or more comonomer units, preferably one comonomer, selected from alpha-olefins having from 3 to 10 carbon atoms, preferably from alpha-olefins having from 4 to 8 carbon atoms. It is preferred that the polymeric component is a copolymer of ethylene and 1-butene or a copolymer of ethylene and 1-octene.

It is preferred that component (c4) does not include any other monomers than ethylene and one or more comonomer units selected from alpha-olefins having from 3 to 10 carbon atoms, i.e. consists of monomer units selected from ethylene and one or more comonomer units, preferably one comonomer, selected from alpha-olefins having from 3 to 10 carbon atoms.

The ethylene/$C_3$-$C_{10}$ alpha olefin copolymer (c4) is preferably produced in a solution polymerization process using a metallocene catalyst, as known in the art.

The ethylene/$C_3$-$C_{10}$ alpha olefin copolymer (c4) is preferably crosslinkable.

As well as the ethylene polymer, the polyethylene composition (PC3) may comprise one or more additives (A3).

If present, the one or more additives (A3) are provided in an amount in the range from 0.0 to 5.0 wt.-%, relative to the total weight of the polyethylene composition (PC3).

The selection of suitable additives for the polyethylene composition (PC3) is within the general knowledge of the person skilled in the art.

For example, the one or more additives (A3) may be selected from the group consisting of flame retardants, antioxidants, stabilizers, fillers, nucleating agents, and antistatic agents.

Such additives are generally commercially available and are described, for example, in "Plastic Additives Handbook", pages 871 to 873, 5th edition, 2001 of Hans Zweifel.

It is understood that the content of additives (A3), given with respect to the total weight of the polyethylene composition (PC3), includes any carrier polymers used to introduce the additives to said polyethylene composition (PC3), i.e. masterbatch carrier polymers. An example of such a carrier polymer would be a polypropylene homopolymer in the form of powder.

Process

In a second aspect, the present invention is directed to a process for producing the film of the first aspect, comprising the following steps:

a) providing the polypropylene composition (PC1), the polyolefin composition (PC2), and the polyethylene composition (PC3);

b) co-extruding at least one layer comprising the polypropylene composition (PC1), one layer comprising the polyolefin composition (PC2), and at least one layer comprising the polyethylene composition (PC3), thereby obtaining the film according to the first aspect.

It is particularly preferred that, in step b), one layer comprising the polypropylene composition (PC1), one layer comprising the polyolefin composition (PC2), and at one layer comprising the polyethylene composition (PC3) are co-extruded, thereby obtaining a 3-layer film according to the first aspect.

The conditions for co-extruding such multilayer films are well-known in the art and are not particularly limited in the context of the process of the second aspect.

It is preferred that the film of the fist aspect is obtainable by, more preferably obtained by, the process of the second aspect.

**Article**

In a third aspect, the present invention is directed to an article comprising the given layers in the following order:

a) a first insulating film (F1);
b) an electrical device (D); and
c) a second insulating film (F2),

wherein the electrical device (D) has a first surface and a second surface located opposite the first surface,
wherein the first surface of the electrical device (D) is in adherent contact with a surface of the first insulating film (F 1) and the second surface of the electrical device (D) is in adherent contact with a surface of the second insulating film (F2), resulting in a layer structure F1-D-F2 having the electrical device (D) disposed between the first insulating film (F1) and the second insulating film (F2);
wherein at least one of the first insulating film (F1) and the second insulating film (F2), preferably both the first insulating film (F1) and the second insulating film (F2), is/are films according to the first aspect,
wherein, if the first insulating film (F1) is a film according to the first aspect, the electrical device is in adherent contact with the third layer (C) of the first insulating film (F1), and
wherein, if the second insulating film (F2) is a film according to the first aspect, the electrical device is in adherent contact with the third layer (C) of the second insulating film (F2).

It is particularly preferred that both the first insulation film (F1) and the second insulating film (F2) are films according to the first aspect, more preferably first insulation film (F 1) and the second insulating film (F2) are the same film according to the first aspect.

In the broadest sense, the electrical device (D) may be any suitable electric device, as would be clear to the person skilled in the art.

All fallback positions and preferred embodiments of the film of the first aspect apply mutatis mutandis to the first insulating film (F1) and/or second insulating film (F2) of the third aspect.

Use

In a final aspect, the present invention is directed to a use of the film of the first aspect as an insulating film for an electrical device.

In the broadest sense, the electrical device may be any suitable electric device, as would be clear to the person skilled in the art.

All fallback positions and preferred embodiments of the film of the aspect apply mutatis mutandis to the film of the final aspect.

**EXAMPLES**

**1. Determination methods**

The following definitions of terms and determination methods apply for the above general description of the invention including the claims as well as to the below examples unless otherwise defined.

**CRYSTEX QC analysis**

*Crystalline and soluble fractions method*

The crystalline (CF) and soluble fractions (SF) of the PCR polypropylene resins as well as the ethylene contents and intrinsic viscosities of the respective fractions were analyzed by use of the CRYSTEX instrument, Polymer Char (Valencia, Spain) in line with ISO16152-2022 - Method 2. Details of the technique and the method can be found in literature (Ljiljana Jeremic, Andreas Albrecht, Martina Sandholzer & Markus Gahleitner (2020) Rapid characterization of high-impact ethylene propylene copolymer composition by crystallization extraction separation: comparability to standard separation methods, International Journal of Polymer Analysis and Characterization, 25:8, 581-596).

The crystalline and amorphous fractions are separated through temperature cycles of dissolution at 160 °C, crystallization at 40 °C and re-dissolution in 1,2,4-trichlorobenzene at 160 °C. Quantification of SF and CF and determination of ethylene content (C2) are achieved by means of an integrated infrared detector (IR4) and for the determination of the intrinsic viscosity (IV) an online 2-capillary viscometer is used.

The IR4 detector is a multiple wavelength detector measuring IR absorbance at two different bands (CH3 stretching vibration (centered at app. 2960 cm-1) and the CH stretching vibration (2700-3000 cm-1) that are serving for the determination of the concentration and the ethylene content in ethylenepropylene copolymers. The IR4 detector is calibrated with series of 8 EP copolymers with known ethylene content in the range of 2 wt.-% to 69 wt.-% (determined by 13C-NMR) and each at various concentrations, in the range of 2 and 13 mg/ml. To encounter for both features, concentration and ethylene content at the same time for various polymer concentrations expected during Crystex analyses the following calibration equations were applied:

$$\text{Conc} = a + b*\text{Abs(CH)} + c*(\text{Abs(CH)})^2 + d*\text{Abs(CH}_3) + e*(\text{Abs(CH}_3))^2 + f*\text{Abs(CH)}*\text{Abs(CH}_3)$$

(Equation 1)

$$\text{CH}_3/1000\text{C} = a + b*\text{Abs(CH)} + c*\text{Abs(CH3)} + d*(\text{Abs(CH}_3)/\text{Abs(CH)}) + e*(\text{Abs(CH}_3)/\text{Abs(CH)})^2$$

(Equation 2)

The constants a to e for equation 1 and a to f for equation 2 were determined by using least square regression analysis.

The $\text{CH}_3/1000\text{C}$ is converted to the ethylene content in wt.-% using following relationship:

$$\text{Wt.-\% (ethylene in EP copolymers)} = 100 - \text{CH}_3/1000\text{TC} * 0.3 \qquad \text{(Equation 3)}$$

Intrinsic viscosity (IV) of the PCR polypropylene resin and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$\text{IV (dL/g)} = a* \text{Vsp/c} \qquad \text{(Equation 4)}$$

The samples to be analyzed are weighed out in concentrations of 10 mg/ml to 20 mg/ml. To avoid injecting possible gels and/or polymers which do not dissolve in TCB at 160 °C, like PET and PA, the weighed out sample was packed into a stainless steel mesh MW 0,077/D 0.05 mm.

After automated filling of the vial with 1,2,4-TCB containing 250 mg/l 2,6-tert-butyl-4-methylphenol (BHT) as antioxidant, the sample is dissolved at 160 °C until complete dissolution is achieved, usually for 60 min, with constant stirring of 400 rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the IV [dl/g] and the C2 [wt.-%] of the PP composition. During the second injection the soluble fraction (at low temperature) and the crystalline fraction (at high temperature) with the crystallization cycle are measured (wt.-% SF, wt.-% CF, wt.-% C2, wt.-% C2(SF), wt.-% C2(CF), IV(SF), IV(CF)), where the wt.-% CF is calculated in the following way:

$$\text{Wt.-\% CF} = 100 - \text{wt.-\% SF (Equation 5)}$$

### Microstructure quantification by NMR spectroscopy

Quantitative nuclear-magnetic resonance (NMR) spectroscopy was used to quantify the comonomer and regiodefect content of the heterophasic propylene-ethylene copolymers.

Quantitative $^{13}C\{^{1}H\}$ NMR spectra were recorded in the solution-state using a Bruker Avance III 400 NMR spectrometer operating at 400.15 and 100.62 MHz for $^{1}H$ and $^{13}C$ respectively. All spectra were recorded using a $^{13}C$ optimised 10 mm extended temperature probehead at 125°C using nitrogen gas for all pneumatics. Approximately 200 mg of material was dissolved in approximately 3 ml of 1,2-tetrachloroethane-$d_2$ (TCE-$d_2$) along with chromium-(III)-acety-lacetonate (Cr(acac)$_3$) resulting in a 65 mM solution of relaxation agent in solvent {singh09}. To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme {zhou07,busico07}. A total of 6144 (6k) transients were acquired per spectra.

Quantitative $^{13}C\{^{1}H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present.

Characteristic signals corresponding to the incorporation of ethylene were observed {wang00, cheng84, randall89}.

The comonomer fraction was quantified using the method of Wang et. al. {wang00} through integration of multiple signals across the whole spectral region in the $^{13}C\{^{1}H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to be not present. This approach reduced the overestimation of ethylene content for such systems and was achieved by reduction of the number of sites used to determine the absolute ethylene content. Through the use of this set of sites the corresponding integral equation becomes

$$p_S = I_A + (0.5 * I_B)$$

$$p_T = I_D + I_F + I_D$$

$$p = (p_S + p_T) / 2$$

$$e = 0.5 * (I_H + (0.5 * I_B))$$

$$fE = e / (e + p)$$

using the same notation used in the article of Wang et. al. {wang00},

The mole percent comonomer incorporation was calculated from the mole fraction:

$$E \, [\text{mol-\%}] = 100 * fE$$

The weight percent comonomer incorporation was calculated from the mole fraction:

$$E \, [\text{wt.-\%}] = 100 * ( fE * 28.06 ) / ( (fE * 28.06) + ((1\text{-}fE) * 42.08) )$$

Characteristic signals corresponding to regio defects were observed {resconi00, wang00}. The presence of isolated 2,1-erythro regio defects was indicated by the presence of the two methyl sites at 17.7 and 17.2 ppm and confirmed by other characteristic sites. The presence of 2,1 regio defect adjacent an ethylene unit was indicated by the two inequivalent $S_{\alpha\beta}$ signals at 34.9 ppm and 34.7 ppm respectively and the $T_{\gamma\gamma}$ at 34.1 ppm.

The amount of isolated 2,1-erythro regio defects ($P_{21e\,isolated}$) was quantified using the average integral of the two characteristic methyl sites at 17.7 ($I_{e8}$) and 17.4 ($I_{e6}$) ppm respectively:

$$P_{21e\,isolated} = ( I_{e6} + I_{e8} ) / 2$$

The amount of 2,1 regio defect adjacent to ethylene ($P_{E21}$) was quantified using the methine site at 34.1

$$ppm\ (I_{T\gamma\gamma}):$$

$$P_{E21} = I_{T\gamma\gamma}$$

The total amount of propene ($P_{total}$) was quantified based on the methyl region ($I_{CH3}$) between 23.0 and 19.9 ppm with correction undertaken for sites included in this region not related to propene insertion. The methyl group $P_{\gamma\gamma}$ resulting from 2,1 regio defect adjacent to ethylene is already present in $I_{CH3}$:

$$P_{total} = I_{CH3} + 2 * P_{21e\,isolated}$$

The isolated 2,1-erythro regio defects ($P_{21e\,isolated}$) is multiplied by 2 to take into account the two (2) propene units in the 2, 1-erythro regio defects.

The mole percent of isolated 2,1-erythro regio defects was quantified with respect to all propene:

$$[21e]\ mol\text{-}\% = 100 * P_{21e\,isolated} / P_{total}$$

The mole percent of 2,1 regio defects adjacent to ethylene was quantified with respect to all propene:

$$[E21]\ mol\text{-}\% = 100 * P_{E21} / P_{total}$$

The total amount of 2,1 defects was quantified as following:

$$[21]\ mol\text{-}\% = [21e] + [E21]$$

Characteristic signals corresponding to other types of regio defects (2,1-threo, 3,1 insertion) were not observed {resconi00}.

zhou07      Zhou, Z., Kuemmerle, R., Qiu, X., Redwine, D., Cong, R., Taha, A., Baugh, D. Winniford, B., J. Mag. Reson. 187 (2007) 225

busico07    Busico, V., Carbonniere, P., Cipullo, R., Pellecchia, R., Severn, J., Talarico, G., Macromol. Rapid Commun. 2007, 28, 1128

resconi00   Resconi, L., Cavallo, L., Fait, A., Piemontesi, F., Chem. Rev. 2000, 100, 1253

wang00      Wang, W-J., Zhu, S., Macromolecules 33 (2000), 1157

cheng84     Cheng, H. N., Macromolecules 17 (1984), 1950

singh09     Singh, G., Kothari, A., Gupta, V., Polymer Testing 28 5 (2009), 475

randall89   Randall, J. Macromol. Sci., Rev. Macromol. Chem. Phys. 1989, C29, 201.

**Comonomer content of C2C8 elastomers**

The 1-octene comonomer content was determined as described in WO 2019/134904 for the comonomer content quantification of poly(ethylene-co-1-octene) copolymers.

**Comonomer content of C2C4C6 terpolymers**

The 1-butene and 1-hexene comonomer contents were determined as described in EP 3 257 895 A1 for the comonomer content quantification of poly(ethylene-co-1-butene-co-1-hexene) terpolymers.

**Comonomer content of E/MA/TMS terpolymers and of EBA polymers**

The methyl acrylate, vinyltrimethoxysilane, and butyl acrylate comonomer contents were determined as described in WO 2018/171951 A1 for the comonomer content quantification of the polar comonomer present in the polymer (a) and the content (wt% and mol%) of silane group(s) containing units (preferably comonomer) present in the polymer (a).

**Maleic anhydride content:** FT-IR standards are prepared by blending a PP homopolymer with different amounts of MAH to create a calibration curve (absorption/thickness in cm versus MAH content in weight %). The MAH content is determined in the solid-state by IR spectroscopy using a Bruker Vertex 70 FTIR spectrometer on 25x25 mm square films of 100 $\mu$m thickness (with an accuracy of $\pm$ 1 $\mu$m) prepared by compression molding at 190 °C with 4 - 6 mPa clamping force. Standard transmission FTIR spectroscopy is employed using a spectral range of 4000-400 cm$^{-1}$, an aperture of 6 mm, a spectral resolution of 2 cm$^{-1}$, 16 background scans, 16 spectrum scans, an interferogram zero filling factor of 32 and Norton Beer strong apodisation.

At the adsorption band peak of 1787 cm$^{-1}$ MAH is measured. For the calculation of the MAH content the range between 1830-1727 cm$^{-1}$ is evaluated (after a base line correction) following the calibration standard curve.

**Melt Flow Rate**

The melt flow rate (MFR) was determined according to ISO 1133 and was indicated in g/10 min. The MFR is an indication of the flowability, and hence the processability, of the polymer. The higher the melt flow rate, the lower the viscosity of the polymer. The $MFR_2$ of polypropylene was determined at a temperature of 230 °C and a load of 2.16 kg. The $MFR_2$ of polyethylene is measured at a temperature 190 °C and a load of 2.16 kg.

**Density**

The density is measured according to ISO 1183-187. Sample preparation is done by compression moulding in accordance with ISO 1872-2:2007.

**Xylene cold solubles (XCS)**

The xylene soluble (XS) fraction as defined and described in the present invention is determined in line with ISO 16152 as follows: 2.0 g of the polymer were dissolved in 250 ml p-xylene at 135°C under agitation. After 30 minutes, the solution was allowed to cool for 15 minutes at ambient temperature and then allowed to settle for 30 minutes at 25 +/- 0.5°C. The solution was filtered with filter paper into two 100 ml flasks. The solution from the first 100 ml vessel was evaporated in nitrogen flow and the residue dried under vacuum at 90 °C until constant weight is reached. The xylene soluble fraction (percent) can then be determined as follows:

XS% = (100*m*Vo)/(mo*v); mo = initial polymer amount (g); m = weight of residue (g); Vo = initial volume (ml); v = volume of analysed sample (ml).

**DSC analysis, melting temperature ($T_m$) and heat of fusion ($H_f$), crystallization temperature ($T_c$) and heat of crystallization ($H_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. Crystallization temperature ($T_c$) and crystallization enthalpy ($H_c$) are determined from the cooling step, while melting temperature ($T_m$) and melting enthalpy ($H_m$) are determined from the second heating step.

**Peel Force test**

<u>Method a)</u>

Glass bars of 3x30 cm dimension were laminated in a following construction: glass bar / PE adhesive layer / small teflon sheet / PP outer layer. A small sheet of Teflon is inserted in the upper middle on the glass, this will generate a small part of the PP outer layer that is not adhered to the PE adhesive layer. This part will be used as the cutting and anchoring point for the tensile testing device. All vacuum laminations were performed at 150 °C, using 4 minutes of evacuation time and 6 minutes holding time with membrane down at a pressure at 800 mbar. The laminate is then cut along the laminate to one stripe, with 13 mm width, the cut goes through the PP layer and the PE film all the way down to the glass surface.

The laminate is mounted in the tensile testing equipment and the clamp of the tensile testing device is attached to the end of the strip.

The pulling angle is 90° in relation to the laminate and the pulling speed is 50 mm/min.

The adhesion force is the average force per 50 mm of peeling starting 0mm into the strip and ending at 100mm.

The average force over the 50 mm is divided by 1.3 as the width of the strip is 13 mm and presented as the adhesion strength (N/cm).

Method b)

Glass plates of A5 format (14.85×21.00 cm) were laminated in a following construction: glass plate / PE adhesive layer / small teflon sheet / PP outer layer (note: the PP outer layer is itself a co-extruded A'/A/B film as disclosed below). Between the PE adhesive layer and PP outer layer, small sheet of Teflon is inserted in the upper middle on the glass, this will generate a small part of the PP outer layer that is not adhered to the PE adhesive layer. This part will be used as the cutting and anchoring point for the tensile testing device. All vacuum laminations were performed at 150 °C, using 4 minutes of evacuation time and 6 minutes holding time with membrane down at a pressure at 800 mbar. The laminate is then cut along the laminate to five stripes, with 13 mm width each, the cut goes through the backsheet and the encapsulant film all the way down to the glass surface.

This test method specifies a floating roller method for determination of peeling resistance and adhesive behaviour. Therefore, a laminated glass-plate is inserted into a horizontal peel test fixture with the flexible adherent gripped in the lower jaw of the test machine. The peeling angle is 90° in relation to the laminate with a constant crosshead separation speed of 50mm/min. The adhesion strength (N/mm) is the average force (N) divided by the width of the flexible adherent (mm). It is determined within the measurement length (>60mm) which starts 10mm after the initial peak and ends 10mm before the test is stopped.

**UL 94 thin material vertical burning test**

Monolayer films as produced below were tested according to UL94 test, chapter 11. 200 x 50 mm specimens were rolled to tubular and conical form (around a 13mm diameter mandrel) according to the testing procedure. 5 samples each were tested, and 3 seconds flame was applied 2 times on each sample. Afterflame times were recoded, as well as, whether the specimens burn up to 125mm mark. Also dripping behavior and especially the presence of burning particles igniting cotton indicator was rated. Samples were classified VTM-0, VTM-2 and fail as described in the standard.

**2. Examples**

**2.1 Synthesis of the heterophasic propylene-ethylene copolymers (HECO)**

The catalyst used to prepare HECO1 and HECO3 was a Ziegler-Natta catalyst as used in the inventive examples of WO 2016/066446 A1 and pre-polymerized with vinylcyclohexane to achieve nucleation with poly(vinylcyclohexane). Nucleation by prepolymerization with vinylcyclohexane is described in EP 2 960 256 B1 and EP 2 960 279 B1 in detail.

For each of HECO 1 and HECO3, dicyclopentyl dimethoxy silane (donor D) was used as external donor and triethyl aluminium (TEAL) was used as co-catalyst.

The polymerization conditions for HECO1 and HECO3 are presented in Table 1 below.

HECO2 was prepared according to the procedure of HECOB of WO 2017/071847 A1.

The resultant polymer powders of HECO1 to HECO 3 were compounded with 1500 ppm ADK-STAB A-612 (supplied by Adeka Corporation) and 300 ppm Synthetic hydrotalcite (ADK STAB HT supplied by Adeka Corporation) on a ZSK 58 twin screw extruder, with melt temperature of 205 °C, production rate 200 kg/h.

**Table 1** Polymerization conditions for HECO1 and HECO3.

|  |  | HECO1 | HECO3 |
|---|---|---|---|
| **Prepolymerization (R0)** |  |  |  |
| TEAL/Ti ratio | [mol/mol] | 78 | 125 |
| TEAL/donor ratio | [mol/mol] | 12 | 7 |
| Temperature | [°C] | 21 | 20 |

(continued)

|  |  | HECO1 | HECO3 |
|---|---|---|---|
| **Prepolymerization (R0)** |  |  |  |
| Pressure | [kPa] | 5460 | 5460 |
| H2/C3 | [mol/kmol] | 0.3 | 0.3 |
| **Loop reactor (R1)** |  |  |  |
| Temperature | [°C] | 80 | 70 |
| Split | [wt.-%] | 46.9 | 37.2 |
| H2/C3 | [mol/kmol] | 0.6 | 1.8 |
| $MFR_2$ (h-PP1) | [g/10 min] | 3.4 | 3.9 |
| **1st Gas phase reactor (R2)** |  |  |  |
| Temperature | [°C] | 85 | 85 |
| Split | [wt.-%] | 38.4 | 52.5 |
| Split ratio (R1/R2) | [-] | 55:45 | 41:59 |
| H2/C3 | [mol/kmol] | 11.0 | 7.5 |
| $MFR_2$ (h-PP2) | [g/10 min] | 2.6 | 2.9 |
| $MFR_2$ (M) | [g/10 min] | 3.0 | 3.3 |
| **2nd Gas phase reactor (R3)** |  |  |  |
| Temperature | [°C] | 70 | 75 |
| Split | [wt.-%] | 14.7 | 10.3 |
| H2/C2 | [mol/kmol] | 313 | 390 |
| C2/C3 | [mol/kmol] | 426 | 392 |

Properties of HECO1 to HECO3 are given in Table 2.

**Table 2** Properties of the heterophasic propylene-ethylene copolymers (HECO)

|  |  | HECO1 | HECO2 | HECO3 |
|---|---|---|---|---|
| $MFR_2$ | [g/10 min] | 3.0 | 15.0 | 4.0 |
| C2(total) | [wt.-%] | 5.3 | 17.4 | 8.1 |
| SF | [wt.-%] | 13.1 | 31.7 | 16.6 |
| CF | [wt.-%] | 86.9 | 68.3 | 83.4 |
| C2(SF) | [wt.-%] | 30.0 | 39.5 | 24.6 |
| C2(CF) | [wt.-%] | 2.4 | 7.1 | 4.9 |
| iV | [dL/g] | 2.47 | 1.84 | 2.22 |
| iV(SF) | [dL/g] | 1.71 | 2.23 | 1.39 |
| iV (CF) | [dL/g] | 2.53 | 1.62 | 2.38 |
| Tm | [°C] | 168 | 164 | 144 |
| Tc | [°C] | 130 | 119 | 103 |
| 2,1-regiodefects | [%] | none | none | none |

**2.2 Production of ethylene/methyl acrylate/vinyltrimethoxysilane terpolymer (PE3)**

PE3 is an ethylene/methyl acrylate/vinyltrimethoxysilane terpolymer having an $MFR_2$ (190 °C) of 3.5 g/10 min, a density of 948.2 kg/m$^3$, a methyl acrylate content of 22.5 wt.-% (8.75 mol-%), a vinyl trimethoxysilane content of 1.4 wt.-% (0.32 mol-%), and a melting temperature of 92 °C.

PE3 was produced in a commercial high pressure tubular reactor at a pressure of 2500-3000 bar and max temperature 250-350 °C using conventional peroxide initiator. Ethylene monomer, methyl acrylated (MA) polar comonomer and vinyl trimethoxysilane (VTMS) comonomer were added to the reactor system in a conventional manner. Chain transfer agent(s) (CTA) was used to regulated MFR as well known for a skilled person. The balance of properties described for PE3 above would enable the skilled person to suitably adjust the polymerization conditions to achieve the required balance.

## 2.3 Production of multilayer films

Co-extruded multilayer films were produced using the recipes for IE1 to IE3 in Table 3. The compositions used in each layer of the multilayer films were prepared in a co-rotating twin-screw extruder (Coperion ZSK 40) at 210 °C according to the recipes in Table 3.

The inventive multilayer films were prepared on a COLLIN Lab & Pilot Solutions GmbH cast film line consisting of 3 automatically controlled extruders, a chill roll unit, a take-off unit with a cutting station and three winders to wrap the film and edge strips. Each layer was extruded with an individual extruder: a first layer (layer A) was extruded with a first extruder equipped with 25 mm screw with LD of 30 at a screw speed of 180 rpm, a melt temperature of 222 °C and a melt pressure of 151-181 bar. A second layer (layer B) was extruded with extruder equipped with 30 mm screw with LD of 30 at a screw speed of 25 rpm, a melt temperature of 225 °C and a melt pressure of 99-115 bar. A third layer (layer C) was extruded with extruder equipped with 25 mm screw with LD of 30 at a screw speed of 126 rpm, a melt temperature of 180 °C and a melt pressure of 139-154 bar. The thickness of layer A was 125 $\mu$m, for layer B was 30 $\mu$m, and for layer C was 100 $\mu$m resulting in a film thickness of the 3-layer coextruded film of 255 $\mu$m. The chill roll is cooled to 25 °C. The die width is 0.5-1.5 mm.

Multilayer films having a A'/A/B structure were prepared on a Dr. Collin cast film line consisting of 3 automatically controlled extruders, a chill roll unit, a take-off unit with a cutting station and three winders to wrap the film and edge strips. Each layer was extruded with an individual extruder: a first layer (layer A') was extruded with a first extruder equipped with 25 mm screw with LD of 30 at a screw speed of 48-51 rpm, a melt temperature of 206-207 °C and a melt pressure of 82-106 bar. A second layer (layer A) was extruded with extruder equipped with 25 mm screw with LD of 30 at a screw speed of 45-47 rpm, a melt temperature of 220 °C and a melt pressure of 93-112 bar. A third layer (layer B) was extruded with extruder equipped with 30 mm screw with LD of 30 at a screw speed of 135-136 rpm, a melt temperature of 235-236 °C and a melt pressure of 171-184 bar. The thickness of each layer A was 50 $\mu$m, for each core layer A was 300 $\mu$m, and for each layer B was 50 $\mu$m resulting in a film thickness of the 3-layer coextruded film of 400 $\mu$m. The chill roll is cooled to 25 °C. The die width is 0.5-1.5 mm. Layers A' and A have the same composition (i.e. the composition given in Table 3 for layer A), whilst layer B has the composition given in Table 3 for layer B.

These A'/A/B films thus produced were used to obtain the peel test data for IE1 to IE3 presented in Table 3 (in combination with a 450 $\mu$m film of PE3, produced on a Dr. Collin single screw (30mm) cast film line having a screw speed of 168 rpm, a melt temperature of 162 °C, and melt pressure of 96 bar).

Additionally, monolayer films corresponding to the layer A composition were produced for each of CE1 to CE5 and IE1 (layer A of IE1 being the same as for IE2 and IE3). The comparative monolayer films were produced on a Plastik Maschinenbau PM 30 extruder, having a screw speed of 80 rpm, a melt temperature of 245-250 °C, and melt pressure of 45-63 bar to yield 200 $\mu$m films of CE1 to CE5 and the inventive monolayer films were produced on a Dr. Collin single screw (30mm) cast film line having a screw speed of 193 rpm, a melt temperature of 220-222 °C, and melt pressure of 204-211 bar to yield 300 $\mu$m films of IE1.

The monolayer films thus produced were used to obtain the UL94 data for CE1 to CE5 and IE1 to IE3 presented in Table 3, as well as the peel test data for CE1 to CE5 presented in Table 3 (in combination with a 450 $\mu$m film of PE3, produced on a Dr. Collin single screw (30mm) cast film line having a screw speed of 168 rpm, a melt temperature of 162 °C, and melt pressure of 96 bar).

The following components were employed in Table 3:

PE-a     an elastomeric ethylene-octene copolymer with a trade name of Queo 8230, commercially available from Borealis AG, having an MFR$_2$ (190 °C) of 30 g/10 min, a density of 883 kg/m$^3$, a 1-octene content of 9.6 mol-%, and a melting temperature of 76 °C.

PE-b     an elastomeric ethylene-octene copolymer with a trade name of Queo 2M138, commercially available from Borealis AG, having an MFR$_2$ (190 °C) of 30 g/10 min, a density of 883 kg/m$^3$, a 1-octene content of 11.0 mol-%, and a melting temperature of 52 °C.

(continued)

PE1 an elastomeric ethylene-octene copolymer with a trade name of Queo 7007LA, commercially available from Borealis AG, having an $MFR_2$ (190 °C) of 6.6 g/10 min, a density of 870 kg/m$^3$, a 1-octene content of 11.0 mol-%, and a melting temperature of 48 °C.

PE2 a metallocene catalysed linear low density ethylene-butene-hexene terpolymer corresponding to example IE1 of EP 3 257 895 A1 having a 1-butene content of 0.3 mol-% (0.6 wt%), a 1-hexene content of 2.6 mol-% (8.1 wt%), density of 918 kg/m$^3$, a melt flow rate $MFR_2$ of 1.5 g/10 min, and a melting temperature of 122°C.

FR1 an inorganic phosphinate-based flame retardant having the trade name Phoslite B404A, commercially available from Italmatch Chemicals (Italy).

FR2 an inorganic phosphinate-based flame retardant having the trade name Phoslite B407A, commercially available from Italmatch Chemicals (Italy).

PMP a maleic anhydride-grafted polypropylene with a trade name of Epolene E-43, having a density of 934 kg/m$^3$ and a maleic anhydride content of 2.9 wt.-% commercially available from Westlake Polymers LLC (US).

TiO$_2$ MB a titanium dioxide masterbatch containing 70 wt.-% of titanium dioxide, commercially available under the trade name Polywhite P 8377 CL from LyondellBasell (Italy)).

Table 3 Recipes and properties of Comparative and Inventive multilayer films

|  |  | CE1 | CE2 | CE3 | CE4 | CE5 | IE1 | IE2 | IE3 |
|---|---|---|---|---|---|---|---|---|---|
| **Layer A** |  |  |  |  |  |  |  |  |  |
| HECO1 | [wt.-%] | 45.0 | 94.0 | 87.0 | 38.0 | 35.0 | 87.0 | 87.0 | 87.0 |
| HECO2 | [wt.-%] | - | - | - | 56.0 | 52.0 | - | - | - |
| PE-a | [wt.-%] | - | - | 7.0 | - | - | - | - | - |
| PE-b | [wt.-%] | - | - | - | - | 7.0 | - | - | - |
| FR1 | [wt.-%] | 10.0 | 6.0 | 6.0 | 6.0 | 6.0 | 4.0 | 4.0 | 4.0 |
| FR2 | [wt.-%] | - | - | - | - | - | 4.0 | 4.0 | 4.0 |
| TiO$_2$ MB | [wt.-%] | 45.0 | - | - | - | - | 5.0 | 5.0 | 5.0 |
| **Layer B** |  |  |  |  |  |  |  |  |  |
| HECO3 | [wt.-%] | n/a | n/a | n/a | n/a | n/a | 80.0 | 80.0 | 75.0 |
| PE1 | [wt.-%] | n/a | n/a | n/a | n/a | n/a | 10.0 | 10.0 | 10.0 |
| PE2 | [wt.-%] | n/a | n/a | n/a | n/a | n/a | 10.0 | - | 10.0 |
| PMP | [wt.-%] | n/a | n/a | n/a | n/a | n/a | - | 10.0 | 5.0 |
| **Layer C** |  |  |  |  |  |  |  |  |  |
| PE3 | [wt.-%] | 100 | 100 | 100 | 100 | 100 | 100 | 100 | 100 |
| **Performance** |  |  |  |  |  |  |  |  |  |
| Peel Force | [N/cm] | 7.3[a] | 7.6[a] | 9.5[a] | 8.1[a] | 9.7[a] | 28[b] | 32[b] | 35[b] |

*a and b refer to different measurement methods for the peel test (see determination methods) the method a) reliably results in slightly higher peel force values than method b), thus the values for IE1 to IE3 would be slightly higher than reported, had method a) been employed.

As can be seen from Table 3, the inventive layer B has significantly improved adhesion to layer C than is the case for layers A of CE1 to CE5 (especially given that the improvement would be significantly higher than the values would appear, given the difference in the measurement method). Since layers A and B are both based on polypropylene compositions, layers A and B would also experience excellent adhesion (in contrast to the poor adhesion between layers A and C which are polypropylene- and ethylene polar copolymer-based respectively.

**Claims**

1. A film that comprises, in the given order, the following layers:

   a) a first layer (A) comprising a polypropylene composition (PC1),
   b) a second layer (B) comprising a polyolefin composition (PC2) comprising:

   i) a propylene-ethylene copolymer (PP2) having a melting temperature ($T_m$), determined according to ISO 11357/part3/method C2, in the range from 130 to 150 °C; and
   ii) a first ethylene/$C_4$-$C_{10}$ alpha olefin copolymer (PE1) having a melting temperature ($T_m$), determined according to ISO 11357/part3/method C2, in the range from 30 to 60 °C, and

   c) a third layer (C) comprising a polyethylene composition (PC3),
   wherein the second layer (B) has a first surface and a second surface located opposite the first surface,
   the first surface of the second layer (B) is in adherent contact with a surface of the first layer (A) and the second surface of the second layer (B) is in adherent contact with a surface of the third layer (C), resulting in a layer structure A-B-C having the second layer (B) disposed between the first layer (A) and the third layer (C).

2. The film according to claim 1, wherein first layer (A), the second layer (B) and the third layer (C) are co-extruded.

3. The film according to claim 1or claim 2, wherein the polyethylene composition (PC3) comprises an ethylene polymer selected from the group consisting of:

   a) an ethylene copolymer (c1) comprising monomer units of ethylene and one or more polar comonomer units selected from the group consisting of ($C_1$-$C_6$)-alkyl acrylate and ($C_1$-$C_6$)-alkyl ($C_1$-$C_6$)-alkylacrylate comonomer units, said ethylene copolymer (c1) additionally bearing silane units;
   b) an ethylene polymer (c2) bearing silane units, wherein the ethylene polymer (c2) does not comprise polar comonomer units selected from the group consisting of ($C_1$-$C_6$)-alkyl acrylate and ($C_1$-$C_6$)-alkyl ($C_1$-$C_6$)-alkylacrylate comonomer units;
   c) a copolymer of ethylene (c3) with vinyl acetate comonomer units; and/or
   d) an ethylene/$C_3$-$C_{10}$ alpha olefin copolymer (c4) having a density, determined according to ISO 1183-187, in the range from 850 to 900 kg/m$^3$.

4. The film according to claim 3, wherein the silane units of the ethylene copolymer (c1) and/or (c2) of the polyethylene composition (PC3) are present as silane-containing comonomers.

5. The film according to any one of the preceding claims, wherein the polyethylene composition (PC3) comprises a terpolymer (PE3) of ethylene, methyl acrylate (MA) and vinyltrimethoxysilane (VTMS) having one or more, preferably all, of the following properties:

   a) a density, determined according to ISO 1183-187, in the range from 920 to 960 kg/m$^3$;
   b) a melt flow rate (MFR$_2$), determined according to ISO 1133 at 190 °C and 2.16 kg, in the range from 1.0 to 10.0 g/10 min;
   c) a methyl acrylate (MA) content, determined according to quantitative $^1$H-NMR spectroscopic analysis, in the range from 15.0 to 30.0 mol%;
   d) a vinyltrimethoxysilane (VTMS) content, determined according to quantitative $^1$H-NMR spectroscopic analysis, in the range from 1.0 to 5.0 mol%; and/or
   e) a melting temperature ($T_m$), determined according to ISO 11357/part3/method C2, in the range from 85 to 115 °C.

6. The film according to any one of the preceding claims, wherein the propylene-ethylene copolymer (PP2) of the polyolefin composition (PC2) is a heterophasic propylene-ethylene copolymer (HECO2), comprising:

   i) a crystalline matrix (M2) being a propylene homopolymer or propylene-ethylene copolymer, most preferably a propylene-ethylene copolymer; and
   ii) an amorphous propylene-ethylene elastomer (E2) that is dispersed in said crystalline matrix (M2),
   wherein the crystalline matrix (M2) is preferably free from 2,1-regiodefects, as determined by quantitative $^{13}$C-NMR spectroscopic analysis, and

wherein the heterophasic propylene-ethylene copolymer (HECO2) has one or more, preferably all, of the following properties:

a) a melt flow rate (MFR$_2$), determined according to ISO 1133 at 230 °C and 2.16 kg, in the range from 0.5 to 10.0 g/10 min;

b) a soluble fraction (SF) content, determined by crystallization extraction (CRYSTEX) analysis, in the range from 10.0 to 25.0 wt.-%, based on the total weight of the heterophasic propylene-ethylene copolymer (HECO2), and a crystalline fraction (CF) content, determined by crystallization extraction (CRYSTEX) analysis, in the range from 75.0 to 90.0 wt.-%, based on the total weight of the heterophasic propylene-ethylene copolymer (HECO2);

c) an ethylene content (C2(total)), determined by CRYSTEX QC analysis, in the range from 5.0 to 15.0 wt.-%;

d) an ethylene content of the soluble fraction (C2(SF)), determined by CRYSTEX QC analysis, in the range from 15.0 to 35.0 wt.-%;

e) an ethylene content of the crystalline fraction (C2(CF)), determined by CRYSTEX QC analysis, in the range from 1.0 to 8.0 wt.-%;

f) an intrinsic viscosity of the soluble fraction (iV(SF)), determined by CRYSTEX QC analysis, in the range from 0.80 to 2.00 dL/g; and/or

g) an intrinsic viscosity of the crystalline fraction (iV(CF)), determined by CRYSTEX QC analysis, in the range from 1.80 to 3.00 dL/g.

7. The film according to any one of the preceding claims, wherein the first ethylene/C$_4$-C$_{10}$ alpha olefin copolymer (PE1) of the polyolefin composition (PC2) has one or more, preferably all, of the following properties:

a) a density, determined according to ISO 1183-187, in the range from 850 to 890 kg/m$^3$;

b) a melt flow rate (MFR$_2$), determined according to ISO 1133 at 190 °C and 2.16 kg, in the range from 1.0 to 15.0 g/10 min; and/or

c) a 1-octene (C8) content, determined according to quantitative $^{13}$C-NMR spectroscopic analysis, in the range from 5 to 15 mol-%.

8. The film according to any one of the preceding claims, wherein the polyolefin composition (PC2) further comprises a second ethylene/C$_4$-C$_{10}$ alpha olefin copolymer (PE2) comprising one or more C$_4$-C$_{10}$ alpha olefin comonomer units that is different to the first ethylene/C$_4$-C$_{10}$ alpha olefin copolymer (PE1), wherein the second ethylene/C$_4$-C$_{10}$ alpha olefin copolymer (PE2) has one or more, preferably all, of the following properties:

a) a density, determined according to ISO 1183-187, in the range from 900 to 940 kg/m$^3$;

b) a melt flow rate (MFR$_2$), determined according to ISO 1133 at 190 °C and 2.16 kg, in the range from 0.3 to 5.0 g/10 min;

c) a 1-butene (C4) content, determined according to quantitative $^{13}$C-NMR spectroscopic analysis, in the range from 0.05 to 1.00 mol-%;

d) a 1-hexene (C6) content, determined according to quantitative $^{13}$C-NMR spectroscopic analysis, in the range from 1.0 to 6.0 mol-%; and/or

e) a melting temperature (T$_m$), determined according to ISO 11357/part3/method C2, in the range from 110 to 135 °C.

9. The film according to any one of the preceding claims, wherein the polyolefin composition (PC2) further comprises a polar modified polypropylene (PMP), more preferably a maleic anhydride-grafted polypropylene (MAH-PP), wherein the maleic anhydride-grafted polypropylene (MAH-PP) preferably has a density, determined according to ISO 1183-187, in the range from 910 to 950 kg/m$^3$ and/or a maleic anhydride content, determined according to FT-IR analysis, in the range from 1.0 to 5.0 wt.-%.

10. The film according to any one of the preceding claims, wherein the polyolefin composition (PC2) comprises, more preferably consists of:

a) an amount in the range from 50.0 to 97.0 wt.-%, more preferably from 60.0 to 95.0 wt.-%, most preferably from 70.0 to 93.0 wt.-%, relative to the total weight of the polyolefin composition (PC2), of the propylene-ethylene copolymer (PP2) according to claim 1, more preferably the heterophasic propylene-ethylene copolymer (HECO2) according to claim 6;

b) an amount in the range from 3.0 to 30.0 wt.-%, more preferably from 5.0 to 20.0 wt.-%, most preferably from 7.0 to 15.0 wt.-%, relative to the total weight of the polyolefin composition (PC2), of the first ethylene/$C_4$-$C_{10}$ alpha olefin copolymer (PE1), more preferably the first ethylene/$C_4$-$C_{10}$ alpha olefin copolymer (PE1) according to claim 7;

c) optionally, an amount in the range from 0.0 to 20.0 wt.-%, more preferably from 2.0 to 15.0 wt.-%, most preferably from 4.0 to 12.0 wt.-%, relative to the total weight of the polyolefin composition (PC2), of the second ethylene/ $C_4$-$C_{10}$ alpha olefin copolymer (PE2) according to claim 8;

d) optionally, an amount in the range from 0.0 to 20.0 wt.-%, more preferably from 2.0 to 15.0 wt.-%, most preferably from 4.0 to 12.0 wt.-%, relative to the total weight of the polyolefin composition (PC2), of the polar modified polypropylene (PMP) according to claim 9, more preferably the maleic anhydride-grafted polypropylene (MAH-PP) according to claim 9; and

e) optionally, an amount in the range from 0.0 to 5.0 wt.-%, relative to the total weight of the polyolefin composition (PC2), of one or more additives (A2).

11. The film according to any one of the preceding claims, wherein the polypropylene composition (PC1) comprises a heterophasic propylene-ethylene copolymer (HECO1), comprising:

i) a crystalline matrix (M1) being a propylene homopolymer or propylene-ethylene copolymer, most preferably a propylene homopolymer; and

ii) an amorphous propylene-ethylene elastomer (E1) that is dispersed in said crystalline matrix (M1),

wherein the crystalline matrix (M1) is preferably free from 2,1-regiodefects, as determined by quantitative $^{13}$C-NMR spectroscopic analysis, and

wherein the heterophasic propylene-ethylene copolymer (HECO1) has one or more, preferably all, of the following properties:

a) a melt flow rate ($MFR_2$), determined according to ISO 1133 at 230 °C and 2.16 kg, in the range from 0.1 to 15 g/10 min;

b) a soluble fraction (SF) content, determined by crystallization extraction (CRYSTEX) analysis, in the range from 6.0 to 20.0 wt.-%, based on the total weight of the heterophasic propylene-ethylene copolymer (HECO1), and a crystalline fraction (CF) content, determined by crystallization extraction (CRYSTEX) analysis, in the range from 80.0 to 94.0 wt.-%, based on the total weight of the heterophasic propylene-ethylene copolymer (HECO1);

c) an ethylene content (C2(total)), determined by CRYSTEX QC analysis, in the range from 1.0 to 10.0 wt.-%;

d) an ethylene content of the soluble fraction (C2(SF)), determined by CRYSTEX QC analysis, in the range from 20.0 to 50.0 wt.-%;

e) an ethylene content of the crystalline fraction (C2(CF)), determined by CRYSTEX QC analysis, in the range from 1.0 to 5.0 wt.-%;

f) an intrinsic viscosity of the soluble fraction (iV(SF)), determined by CRYSTEX QC analysis, in the range from 1.00 to 5.00 dL/g;

g) an intrinsic viscosity of the crystalline fraction (iV(CF)), determined by CRYSTEX QC analysis, in the range from 2.00 to 5.50 dL/g; and/or

h) a melting temperature ($T_m$), determined according to ISO 11357/part3/method C2, in the range from 158 to 172 °C.

12. The film according to any one of the preceding claims that consists of the first layer (A), the second layer (B) and the third layer (C).

13. A process for producing the film according to any one of the preceding claims, comprising the following steps:

a) providing the polypropylene composition (PC1), the polyolefin composition (PC2), and the polyethylene composition (PC3); and

b) co-extruding at least one layer comprising the polypropylene composition (PC1), one layer comprising the polyolefin composition (PC2), and at least one layer comprising the polyethylene composition (PC3), thereby obtaining the film according to any one of the preceding claims.

14. An article comprising the given layers in the following order:

a) a first insulating film (F1);

b) an electrical device (D); and

c) a second insulating film (F2),
wherein the electrical device (D) has a first surface and a second surface located opposite the first surface,
wherein the first surface of the electrical device (D) is in adherent contact with a surface of the first insulating film (F1) and the second surface of the electrical device (D) is in adherent contact with a surface of the second insulating film (F2), resulting in a layer structure F1-D-F2 having the electrical device (D) disposed between the first insulating film (F1) and the second insulating film (F2);
wherein at least one of the first insulating film (F1) and the second insulating film (F2), preferably both the first insulating film (F1) and the second insulating film (F2), is/are films according to any one of claims 1 to 12,
wherein, if the first insulating film (F1) is a film according to any one of claims 1 to 12, the electrical device is in adherent contact with the third layer (C) of the first insulating film (F1), and
wherein, if the second insulating film (F2) is a film according to any one of claims 1 to 12, the electrical device is in adherent contact with the third layer (C) of the second insulating film (F2).

15. A use of the film according to any one of claims 1 to 12 as an insulating film for electrical devices.

Europäisches
Patentamt
European
Patent Office
Office européen
des brevets

# EUROPEAN SEARCH REPORT

**Application Number**

EP 24 17 3553

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 241 985 A1 (BOREALIS AG [AT]) 13 September 2023 (2023-09-13) * abstract; claims 1-17 * * paragraphs [0121], [0141], [0168] * * paragraphs [0126], [0127] * ----- | 1,2,13 | INV. B32B27/08 B32B27/18 B32B27/20 B32B27/30 B32B27/32 C08J5/18 C08L23/04 |
| X | US 10 934 422 B2 (BOREALIS AG [AT]; ISOVOLTAIC SOLINEX GMBH [AT]) 2 March 2021 (2021-03-02) * the whole document * ----- | 1,2,6-15 | |
| X | US 2023/212379 A1 (AARNIO-WINTERHOF MINNA [AT] ET AL) 6 July 2023 (2023-07-06) * abstract; claims 1-14 * * paragraphs [0441] - [0443]; table 4 * * paragraphs [0053], [0319] * * paragraph [0173] * ----- | 1-15 | |
| A | US 2022/347980 A1 (BERNREITNER KLAUS [AT] ET AL) 3 November 2022 (2022-11-03) * abstract; claims 1-15 * ----- | 1-15 | |

**TECHNICAL FIELDS SEARCHED (IPC)**

B32B
C08J
C08L

The present search report has been drawn up for all claims

| Place of search | Date of completion of the search | Examiner |
|---|---|---|
| The Hague | 7 October 2024 | Bergmans, Koen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 17 3553

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2024

| Patent document cited in search report | | | Publication date | Patent family member(s) | | Publication date |
|---|---|---|---|---|---|---|
| EP 4241985 | A1 | | 13-09-2023 | NONE | | |
| US 10934422 | B2 | | 02-03-2021 | AU 2016345511 | A1 | 10-05-2018 |
| | | | | BR 112018008441 | A2 | 06-11-2018 |
| | | | | CA 3003490 | A1 | 04-05-2017 |
| | | | | CN 108431121 | A | 21-08-2018 |
| | | | | EA 201800273 | A1 | 31-10-2018 |
| | | | | EP 3368605 | A1 | 05-09-2018 |
| | | | | ES 2914237 | T3 | 08-06-2022 |
| | | | | JP 6793739 | B2 | 02-12-2020 |
| | | | | JP 2018536081 | A | 06-12-2018 |
| | | | | KR 20180096600 | A | 29-08-2018 |
| | | | | MY 185749 | A | 03-06-2021 |
| | | | | PH 12018500920 | A1 | 05-11-2018 |
| | | | | PL 3368605 | T3 | 22-08-2022 |
| | | | | SA 518391439 | B1 | 21-09-2021 |
| | | | | US 2019382567 | A1 | 19-12-2019 |
| | | | | WO 2017071847 | A1 | 04-05-2017 |
| | | | | ZA 201802569 | B | 30-01-2019 |
| US 2023212379 | A1 | | 06-07-2023 | CN 115666938 | A | 31-01-2023 |
| | | | | EP 3915782 | A1 | 01-12-2021 |
| | | | | US 2023212379 | A1 | 06-07-2023 |
| | | | | WO 2021239445 | A1 | 02-12-2021 |
| US 2022347980 | A1 | | 03-11-2022 | AU 2018216859 | A1 | 08-08-2019 |
| | | | | CN 110234502 | A | 13-09-2019 |
| | | | | EP 3576942 | A1 | 11-12-2019 |
| | | | | ES 2952588 | T3 | 02-11-2023 |
| | | | | JP 2020507920 | A | 12-03-2020 |
| | | | | KR 20190112759 | A | 07-10-2019 |
| | | | | KR 20220070046 | A | 27-05-2022 |
| | | | | KR 20230169366 | A | 15-12-2023 |
| | | | | MY 188669 | A | 22-12-2021 |
| | | | | TW 201831324 | A | 01-09-2018 |
| | | | | US 2022347980 | A1 | 03-11-2022 |
| | | | | WO 2018141672 | A1 | 09-08-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018141672 A
- WO 2019134904 A
- EP 3257895 A1
- WO 2018171951 A1
- WO 2016066446 A1
- EP 2960256 B1
- EP 2960279 B1
- WO 2017071847 A1

### Non-patent literature cited in the description

- **HANS ZWEIFEL**. Plastic Additives Handbook. 2001, 871-873
- **LJILJANA JEREMIC** ; **ANDREAS ALBRECHT** ; **MARTINA SANDHOLZER** ; **MARKUS GAHLEIT-NER** ; **2020**. Rapid characterization of high-impact ethylene propylene copolymer composition by crystallization extraction separation: comparability to standard separation methods. *International Journal of Polymer Analysis and Characterization*, vol. 25 (8), 581-596
- **ZHOU, Z.** ; **KUEMMERLE, R.** ; **QIU, X.** ; **REDWINE, D.** ; **CONG, R.** ; **TAHA, A.** ; **BAUGH, D.** ; **WINNI-FORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **RESCONI, L.** ; **CAVALLO, L.** ; **FAIT, A.** ; **PIEMON-TESI, F.** *Chem. Rev.*, 2000, vol. 100, 1253
- **WANG, W-J.** ; **ZHU, S.** *Macromolecules*, 2000, vol. 33, 1157
- **CHENG, H. N.** *Macromolecules*, 1984, vol. 17, 1950
- **SINGH, G.** ; **KOTHARI, A.** ; **GUPTA, V.** *Polymer Testing*, 2009, vol. 28 (5), 475
- **RANDALL, J.** *Macromol. Sci., Rev. Macromol. Chem. Phys.*, 1989, vol. C29, 201